(19) Europäisches Patentamt
European Patent Office
Office européen des brevets

(11) EP 4 317 252 A1

(12) EUROPEAN PATENT APPLICATION
published in accordance with Art. 153(4) EPC

(43) Date of publication:
07.02.2024 Bulletin 2024/06

(21) Application number: 22774920.7

(22) Date of filing: 28.02.2022

(51) International Patent Classification (IPC):
*C08G 65/34 (2006.01)* *C08G 65/40 (2006.01)*
*C08G 81/00 (2006.01)* *C08J 5/22 (2006.01)*
*H01B 1/06 (2006.01)* *H01B 1/12 (2006.01)*
*H01M 8/10 (2016.01)* *H01M 8/1018 (2016.01)*
*H01M 8/1025 (2016.01)* *H01M 8/1067 (2016.01)*
*C25B 13/04 (2021.01)* *C25B 13/08 (2006.01)*
*C25B 1/04 (2021.01)*

(52) Cooperative Patent Classification (CPC):
**C08G 65/34; C08G 65/40; C08G 81/00; C08J 5/22; C25B 1/04; C25B 13/04; C25B 13/08; H01B 1/06; H01B 1/12; H01M 8/10; H01M 8/1018; H01M 8/1025; H01M 8/1067;** Y02E 60/50

(86) International application number:
PCT/JP2022/008257

(87) International publication number:
WO 2022/202122 (29.09.2022 Gazette 2022/39)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 23.03.2021 JP 2021048314
05.07.2021 JP 2021111235
16.12.2021 JP 2021204233

(71) Applicant: **Toray Industries, Inc.**
**Tokyo 103-8666 (JP)**

(72) Inventors:
- **MURAKAMI, Kazuho**
  **Otsu-shi, Shiga 520-8558 (JP)**
- **MATSUI, Kazuma**
  **Otsu-shi, Shiga 520-8558 (JP)**
- **TANAKA, Tsuyoshi**
  **Otsu-shi, Shiga 520-8558 (JP)**
- **IZUHARA, Daisuke**
  **Otsu-shi, Shiga 520-8558 (JP)**

(74) Representative: **Hoefer & Partner Patentanwälte mbB**
**Pilgersheimer Straße 20**
**81543 München (DE)**

# (54) POLYMER ELECTROLYTE MATERIAL, POLYMER ELECTROLYTE MOLDED BODY USING SAME, ELECTROLYTIC MEMBRANE HAVING CATALYST LAYER ATTACHED THERETO, MEMBRANE-ELECTRODE ASSEMBLY, SOLID POLYMER FUEL CELL, AND WATER-ELECTROLYSIS-TYPE HYDROGEN GENERATOR

(57) A polymer electrolyte material composed of a block copolymer having a segment containing an ionic group (hereinafter referred to as an "ionic segment") and a segment containing no ionic group (hereinafter referred to as a "nonionic segment"), wherein the polymer electrolyte material has a phase-separation structure, and satisfies at least one of the following condition 1 or condition 2: <Condition 1> the saturated crystallinity of the polymer electrolyte material is 5% or more and 30% or less, as measured by wide-angle X-ray diffraction; and <Condition 2> the ion exchange capacity (IEC) of the polymer electrolyte material is 1.8 meq/g or more and 3.0 meq/g or less, and the product of the IEC (meq/g) of the polymer electrolyte material and the heat of crystallization (J/g) of the polymer electrolyte material, as measured by differential scanning calorimetry analysis, is 35.0 or more and 47.0 or less. Provided is a polymer electrolyte material having good mechanical durability and excellent proton conductivity.

[FIG. 1]

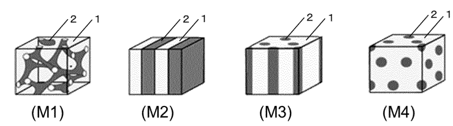


EP 4 317 252 A1

## Description

TECHNICAL FIELD

The present invention relates to a polymer electrolyte material and to a molded polymer electrolyte product, catalyst coated membrane, membrane electrode assembly, polymer electrolyte fuel cell, and water electrolysis hydrogen generator that are produced using the polymer electrolyte material.

BACKGROUND ART

Fuel cells are a kind of power generator from which electric energy is extracted by electrochemical oxidation of a fuel such as hydrogen or methanol, and have recently attracted attention as a clean energy source. Above all, polymer electrolyte fuel cells have a low standard operating temperature of around 100°C and a high energy density. Therefore, polymer electrolyte fuel cells are expected to be widely used for relatively small distributed power generation facilities as well as for power generators for mobile objects such as automobiles and ships. In addition, polymer electrolyte fuel cells have also attracted attention as a power source for small mobile devices and portable devices, and are expected to be substitute applications for secondary batteries such as nickel-hydrogen batteries and lithium-ion batteries in mobile phones and personal computers.

A fuel cell usually includes, as a unit, a cell including a membrane electrode assembly (MEA) sandwiched between separators. In the MEA, catalyst layers are arranged on both sides of an electrolyte membrane, and gas diffusion layers are further arranged on both sides of the resulting laminate. In the MEA, the catalyst layers and the gas diffusion layers that are arranged on both sides of the electrolyte membrane form a pair of electrode layers, and one of the electrode layers is an anode electrode and the other is a cathode electrode. A fuel gas containing hydrogen comes into contact with the anode electrode, and the air comes into contact with the cathode electrode, whereby electric power is generated by an electrochemical reaction. The electrolyte membrane is mainly made from a polymer electrolyte material. The polymer electrolyte material is also used as a binder for the catalyst layer.

Conventionally, "Nafion" (registered trademark) (manufactured by The Chemours Company), which is a fluoropolymer electrolyte, has been widely used as a polymer electrolyte material. On the other hand, an inexpensive hydrocarbon electrolyte material that can be used in place of "Nafion" (registered trademark) and that is excellent in membrane characteristics has been actively developed in recent years. A hydrocarbon electrolyte material excels in low gas permeability and heat resistance, and studies have actively been made particularly on an electrolyte material produced using an aromatic polyether ketone or an aromatic polyether sulfone. A conventional hydrocarbon electrolyte material exhibits the same or superior degree of proton conductivity under high-humidity conditions, compared with a fluorine electrolyte material, but has insufficient proton conductivity.

In response to the above-described problems, an electrolyte membrane having a phase-separation structure is disclosed as a hydrocarbon polymer electrolyte membrane having better proton conductivity and mechanical durability (see, for example, Patent Literature 1 and 2).

Citation List

Patent Literature

Patent Literature 1: WO2008/018487
Patent Literature 2: WO2013/031675

SUMMARY OF INVENTION

Technical Problem

The polymer electrolyte membrane disclosed in the above-mentioned Patent Literature can be expected to be improved in proton conductivity and mechanical durability.

However, proton conductivity and mechanical durability are generally in a trade-off relationship, that is, increasing proton conductivity decreases mechanical durability, and oppositely, increasing mechanical durability decreases proton conductivity. There is a problem in that, despite of using an electrolyte membrane described in Patent Literature 1 and 2, it remains difficult to achieve both of these characteristics at a comparatively high level.

In view of such a background of a conventional technology, an object of the present invention is to provide a

polymer electrolyte material that achieves both proton conductivity and mechanical durability at a comparatively high level.

Solution to Problem

To solve the above-described problems, a polymer electrolyte material according to the present invention has the following constitution. That is,
a polymer electrolyte material composed of a block copolymer having a segment containing an ionic group and a segment containing no ionic group, wherein the polymer electrolyte material has a phase-separation structure, and satisfies at least one of the following condition 1 or condition 2:

<Condition 1> the saturated crystallinity of the polymer electrolyte material is 5% or more and 30% or less, as measured by wide-angle X-ray diffraction; and
<Condition 2> the ion exchange capacity (IEC) of the polymer electrolyte material is 1.8 meq/g or more and 3.0 meq/g or less, and the product of the IEC (meq/g) of the polymer electrolyte material and the heat of crystallization (J/g) of the polymer electrolyte material, as measured by differential scanning calorimetry analysis, is 35.0 or more and 47.0 or less.

To solve the above-described problems, a molded polymer electrolyte product according to the present invention has the following constitution. That is,
a molded polymer electrolyte product including the above-described polymer electrolyte material.
To solve the above-described problems, a catalyst coated membrane according to the present invention has the following constitution. That is,
a catalyst coated membrane constituted with the molded polymer electrolyte product.
To solve the above-described problems, a membrane electrode assembly according to the present invention has the following constitution. That is, a membrane electrode assembly constituted with the molded polymer electrolyte product.
To solve the above-described problems, a polymer electrolyte fuel cell according to the present invention has the following constitution. That is, a polymer electrolyte fuel cell constituted with the molded polymer electrolyte product.
In the polymer electrolyte material according to the present invention, the polymer electrolyte material preferably has a co-continuous or lamellar phase-separation structure.
In the polymer electrolyte material according to the present invention, the phase-separation structure preferably has an average period size of 15 to 100 nm.
In the polymer electrolyte material according to the present invention, the block copolymer is preferably an aromatic polyether copolymer.
In the polymer electrolyte material according to the present invention, the block copolymer is preferably an aromatic polyether ketone copolymer.
In the polymer electrolyte material according to the present invention, the block copolymer preferably has a linker site that links the ionic segment with the nonionic segment.
In the polymer electrolyte material according to the present invention, the nonionic segment preferably contains a structure represented by the following general formula (S3).
[Chem. 1]

$$*\text{-}Ar^5\text{-}Y^3\text{-}Ar^6\text{-}O\text{-}Ar^7\text{-}Y^4\text{-}Ar^8\text{-}O\text{-}* \qquad (S3)$$

(In the general formula (S3), $Ar^5$ to $Ar^8$ independently represent a substituted or unsubstituted arylene group with the proviso that none of $Ar^5$ to $Ar^8$ has an ionic group. $Y^3$ and $Y^4$ independently represent a ketone group or a protective group that may be induced to a ketone group. The symbol * represents a bond with the general formula (S3) or with another constituent unit.)
In the polymer electrolyte material according to the present invention, a structure represented by the general formula (S3) is preferably a structure represented by the following general formula (S4).

[Chem. 2]

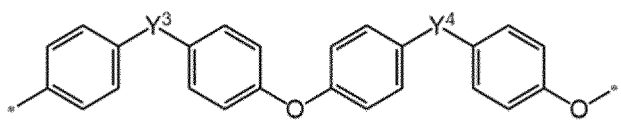

(S4)

(In the general formula (S4), $Y^3$ and $Y^4$ independently represent a ketone group or a protective group that may be induced to a ketone group. The symbol * represents a bond with the general formula (S4) or with another constituent unit.

In the polymer electrolyte material according to the present invention, the number-average molecular weight of the nonionic segment is preferably 15,000 or more.

## Advantageous Effects of Invention

The present invention can provide a polymer electrolyte material that achieves both proton conductivity and mechanical durability at a comparatively high level.

## BRIEF DESCRIPTION OF DRAWINGS

FIG. 1 is a schematic view of a phase-separation structure of the polymer electrolyte material.

## DESCRIPTION OF EMBODIMENTS

Embodiments of the present invention will now be described in detail, and the present invention is not limited to the below-described embodiments, and can be performed with various modifications in accordance with the purpose or usage.

The polymer electrolyte material according to the present invention is composed of a block copolymer having a segment containing an ionic group (hereinafter referred to as an "ionic segment") and a segment containing no ionic group (hereinafter referred to as a "nonionic segment"). A polymer electrolyte material composed of such a block polymer is characterized by easily forming a phase-separation structure. Hereinafter, the polymer electrolyte material is referred to simply as an "electrolyte material" in some cases.

An electrolyte material according to the present invention has a phase-separation structure, and satisfies at least one of the following condition 1 or condition 2. Such an electrolyte material has the capability to achieve both mechanical durability and proton conductivity at a comparatively high level.

<Condition 1> the saturated crystallinity of the polymer electrolyte material is 5% or more and 30% or less, as measured by wide-angle X-ray diffraction; and

<Condition 2> the ion exchange capacity (IEC) of the polymer electrolyte material is 1.8 meq/g or more and 3.0 meq/g or less, and the product of the IEC (meq/g) of the polymer electrolyte material and the heat of crystallization (J/g) of the polymer electrolyte material, as measured by differential scanning calorimetry analysis, is 35.0 or more and 47.0 or less.

Hereinafter, the saturated crystallinity of the polymer electrolyte material as measured by wide-angle X-ray diffraction, ion exchange capacity, and heat of crystallization as measured by differential scanning calorimetry analysis are referred to as the "saturated crystallinity", "IEC", and "heat of crystallization" respectively for short.

In the present invention, having both mechanical durability and proton conductivity at a comparatively high level specifically means having comparatively good mechanical durability and excellent proton conductivity, and having comparatively good proton conductivity and excellent mechanical durability.

In the present invention, having good mechanical durability means having a smaller rate of dry-wet dimensional change in the electrolyte membrane composed of an electrolyte material. Here, the rate of dry-wet dimensional change in the electrolyte membrane can be determined by the following measurement. With a given stress applied to an electrolyte membrane test piece, a dry-wet cycle is repeatedly performed, in which cycle the test piece is exposed to a dry atmosphere (30% RH) and a humidified atmosphere (90% RH) alternately. At the 10th cycle, the rate of dimensional change (%) under the 30% RH and the rate of dimensional change (%) under the 90% RH are measured, and a difference therebetween is regarded as the rate of dry-wet dimensional change (%).

In the present invention, the verification of the phase-separation structure of the electrolyte material, the measurement of the saturated crystallinity and heat of crystallization of the electrolyte material, and the evaluation of the mechanical durability (rate of dry-wet dimensional change) and proton conductivity of the electrolyte material are each performed using a membrane (hereinafter referred to as an "electrolyte membrane") obtained by coating a support base material with a solution in which the electrolyte material is dissolved or dispersed in a suitable solvent, and drying the resulting membrane. In the following description, an electrolyte membrane is substituted for the electrolyte material in some cases.

[Phase-separation Structure]

An electrolyte material according to the present invention has a phase-separation structure. Here, that the electrolyte material has a phase-separation structure means that the phase-separation structure of the above-described electrolyte membrane can be verified as observed under a transmission electron microscope (TEM).

An example of the form of the phase-separation structure of the electrolyte membrane is illustrated in FIG. 1. The phase-separation structure is roughly classified into four structures, co-continuous (M1), lamellar (M2), cylindrical (M3), and sea-island (M4). An electrolyte material according to the present invention has any one of the phase-separation structures (M1) to (M4).

In (M1) to (M4) in FIG. 1, the continuous phase (phase 1) that is a white portion is formed with one segment selected from an ionic segment and a nonionic segment, and a continuous phase or discontinuous phase (phase 2) that is a gray portion is formed with another segment.

The above-described phase-separation structure is described in, for example, Annual Review of Physical Chemistry, 41, 1990, p. 525, or the like.

Controlling the higher-order structure and shape of the ionic segment and the nonionic segment makes it possible to achieve excellent proton conductivity even under low-humidity and low-temperature conditions. That is, the electrolyte membrane having any one of the phase-separation structures (M1) to (M4) makes it possible to form a continuous proton conduction channel, and enhances the proton conductivity.

In a phase-separation structure composed of the co-continuous (M1) and lamellar (M2) phases, the ionic segment and the nonionic segment each form a continuous phase. An electrolyte membrane having such a phase-separation structure has excellent proton conductivity owing to a continuous proton conduction channel formed, and simultaneously has excellent mechanical durability owing to the crystallinity of a domain composed of a nonionic segment. That is, an electrolyte material according to the present invention preferably has a co-continuous (M1) or lamellar (M2) phase-separation structure, and preferably has a co-continuous (M1) phase-separation structure.

The above-described domain means a mass formed by aggregation of similar segments in one or a plurality of polymer chains.

Whether an electrolyte membrane has a co-continuous (M1) or lamellar (M2) phase-separation structure can be verified by the following technique. Specifically, in a case where a desired image is observed by the following technique, the electrolyte membrane is defined as having the structure. In this technique, a comparison is made between the views of three digital slices cut out in the three directions of length, width, and height of a three-dimensional image observed by TEM tomography. For example, in cases where the phase-separation structure of the electrolyte membrane containing a block copolymer having an ionic segment and a nonionic segment is co-continuous (M1) or lamellar (M2), the hydrophilic domain containing an ionic segment and the hydrophobic domain containing a nonionic segment each form a continuous phase in all of the views of the three sides.

In the co-continuous (M1) structure, each continuous phase exhibits an intricate pattern, and in a lamellar (M2) structure, each continuous phase exhibits a pattern in the form of consecutive layers. Here, a continuous phase means a phase in which domains are linked with each other without being isolated, as viewed macroscopically, but the phase may have a portion in which the domains are partially not linked with each other.

On the other hand, in the case of a cylindrical structure (M3) and a sea-island structure (M4), one of the domains does not form a continuous phase in at least one side, and accordingly, the structures can be distinguished from the co-continuous (M1) and lamellar (M2) structures, and in addition, can be distinguished also in accordance with the pattern exhibited by each of the views of three sides.

To clarify the state of aggregation of the ionic segment and the nonionic segment and the contrast therebetween in the observation of the phase-separation structure, for example, the electrolyte membrane is immersed in an aqueous 2 wt% lead acetate solution for 2 days to ion-exchange the ionic group with lead, and then can be used for transmission electron microscopic (TEM) and TEM tomographic observations.

The size of the phase-separation structure can be expressed as the period size of a hydrophilic domain containing an ionic segment and a hydrophobic domain containing a nonionic segment. The period size of a phase-separation structure can be estimated from an autocorrelation function given by processing an image obtained from the phase-separation structure by transmission electron microscopic (TEM) observation.

The average period size of the phase-separation structure is preferably in the range of from 15 to 100 nm, more preferably in the range of from 35 to 80 nm, still more preferably in the range of from 40 to 67 nm, particularly preferably in the range of from 48 to 67 nm, from the viewpoints of proton conductivity and mechanical durability. In addition, the average period size of the phase-separation structure, if more than 100 nm, makes it difficult to form a co-continuous phase-separation structure, and thus, the average period size is preferably in the above-described range also from the viewpoint of obtaining a co-continuous phase-separation structure.

[Electrolyte Material according to First Embodiment]

An electrolyte material according to a first embodiment of the present invention (hereinafter referred to as an "electrolyte material (I)") satisfies a condition 1. That is, the saturated crystallinity of the electrolyte material (I) is 5% or more and 30% or less.

(Saturated Crystallinity)

The saturated crystallinity means the crystallinity that no further allows crystallization to progress, that is, the maximum crystallinity. Specifically, an electrolyte membrane composed of the electrolyte material is hot-pressed at 4.5 MPa at a temperature equal to or higher than the glass transition temperature (Tg) of the electrolyte material. The crystallinity is measured by wide-angle X-ray diffraction every 5 minutes, and the crystallinity in which a change is no longer caused is regarded as the saturated crystallinity. The heating temperature (T (°C)) during the hot-pressing is in the range of $Tg \leq T \leq Tg + 40°C$. Specifically, Tg + 5°C is suitable.

The saturated crystallinity of the electrolyte material (I) is preferably 7% or more, more preferably 9% or more, particularly preferably 10% or more, from the viewpoint of enhancing the mechanical durability. On the other hand, the saturated crystallinity of the electrolyte material (I), if more than 30%, decreases the proton conductivity and the processability. The saturated crystallinity is preferably 25% or less, more preferably 23% or less, still more preferably, 20% or less, particularly preferably 17% or less, from the viewpoints of proton conductivity and the processability.

When used for electrochemical applications such as a polymer electrolyte fuel cell and a water electrolysis hydrogen generator, the electrolyte material is commonly processed into such a molded electrolyte membrane as below-described. The crystallinity of a molded electrolyte membrane produced using the electrolyte material (I) can reach the above-described saturated crystallinity, but does not necessarily need to reach the saturated crystallinity.

A molded electrolyte membrane produced using the electrolyte material (I), that is, a molded electrolyte membrane produced using an electrolyte material composed of a block copolymer having an ionic segment and a nonionic segment has good mechanical durability and excellent proton conductivity, even if the crystallinity of the molded electrolyte membrane has not reached the saturated crystallinity of the electrolyte material. For example, even in a case where the molded electrolyte membrane has hardly been crystallized, the good mechanical durability and excellent proton conductivity of the membrane have been verified.

The crystallinity of the molded electrolyte membrane produced using the electrolyte material (I) can be increased by heating at a temperature equal to or higher than the glass transition temperature of the electrolyte material (I). This enables the proton conductivity and mechanical durability of the molded electrolyte membrane to be further enhanced. In this case, the crystallinity of the molded electrolyte membrane may be increased to approximately the same as the saturated crystallinity of the electrolyte material (I), or may be increased to approximately 1 to 99% of the saturated crystallinity of the electrolyte material (I). A method of adjusting the crystallinity of the molded electrolyte membrane will be described below.

The IEC of the electrolyte material (I) is preferably, but not limited particularly to 1.5 meq/g or more, more preferably 1.8 meq/g or more, still more preferably 1.9 meq/g or more, particularly preferably 2.0 meq/g or more. In addition, the IEC of the electrolyte material (I) is preferably 3.5 meq/g or less, more preferably 3.0 meq/g or less, still more preferably 2.9 meq/g or less, particularly preferably 2.8 meq/g or less.

The IEC refers to the molar amount of an ion exchange group introduced per unit dry mass of an electrolyte material (block copolymer). The IEC can be measured by elemental analysis, neutralization titration, or the like. In cases where the ion exchange group is a sulfonic group, the IEC can be calculated from an S/C ratio using an elemental analysis method, but it is difficult to measure the IEC, for example in cases where the electrolyte material contains a sulfur source other than a sulfonic group. Accordingly, in the present invention, the IEC is defined as a value obtained by the below-described neutralization titration method.

[Electrolyte Material according to Second Embodiment]

An electrolyte material according to a second embodiment of the present invention (hereinafter referred to as an "electrolyte material (II)") satisfies a condition 2. That is, the IEC of the electrolyte material (II) is 1.8 meq/g or more and 3.0 meq/g or less, and the product of the IEC and the heat of crystallization is 35.0 or more and 47.0 or less.

(IEC)

The IEC of the electrolyte material (II) is 1.8 meq/g or more and 3.0 meq/g or less. The electrolyte material (II) the IEC of which is within the above-described range has excellent proton conductivity. The IEC of the electrolyte material (II) is preferably 1.9 meq/g or more, more preferably 2.0 meq/g or more, still more preferably 2.1 meq/g or more, particularly

preferably 2.2 meq/g or more, from the viewpoint of enhancing the proton conductivity. In addition, the IEC is preferably 2.9 meq/g or less, more preferably 2.8 meq/g or less, particularly preferably 2.6 meq/g or less, from the viewpoint of securing high mechanical durability.

(Heat of Crystallization)

The electrolyte material (II) has crystallinity. Herein, "having crystallinity" means having a property of becoming crystallized when heated. The degree of being crystalline can be expressed as a heat of crystallization by differential scanning calorimetry analysis (DSC). In this regard, on whether the electrolyte material has crystallinity, a heat of crystallization of 0.1 J/g or more is one index.

A differential scanning calorimetry analysis (DSC) method that can be used in the present invention is, for example, the below-described analysis method.

An analyte (electrolyte membrane) in an amount of 10 mg is placed in a DSC device, and predried at 110°C for 3 hours. Then, the analyte is heated to 200°C under the below-described conditions without being taken out of the DSC device, and subjected to a temperature modulating differential scanning calorimetry analysis in the heating stage. Here, an analyte to be used is an electrolyte membrane obtained by coating a support base material with the above-described solution in which the electrolyte material is dissolved or dispersed in a suitable solvent, and drying the solution.

- Range of measurement temperature: 30°C to 200°C
- Temperature control: A/C temperature control
- Heating rate: 2°C/min
- Amplitude: ±3°C
- Frequency applied: 0.02 Hz
- Sample pan: aluminum crimped pan
- Atmosphere for measurement and predrying: nitrogen, 100 mL/min

The above-described differential scanning calorimetry analysis (DSC) is advantageous, compared to a conventional analysis method, in that an analyte is not exposed to the air (air) from predrying to measurement, and thus, the analyte is not prone to be affected by moisture in the air. This enhances the measurement accuracy.

(Product of IEC and Heat of Crystallization)

The product of the IEC (meq/g) and heat of crystallization (J/g) of the electrolyte material (II) is 35.0 or more and 47.0 or less.

As above-described, the proton conductivity and the mechanical durability commonly stand in a trade-off relationship, but in the region of the IEC of 1.8 meqJ/g or more and 3.0 meq/g or less, 35.0 or more and 47.0 or less as the product of the IEC and the heat of crystallization makes it possible to achieve both the proton conductivity and the mechanical durability at a comparatively high level.

That the proton conductivity and mechanical durability of the electrolyte membrane commonly stand in a trade-off relationship is as above-described. In addition, a general correlation holds between the proton conductivity and the IEC and between the mechanical durability and the heat of crystallization. That is, the vector of the IEC and the vector of the heat of crystallization are characteristically in the opposite direction to each other. The present inventors have discovered the following: that such a physical quantity obtained by multiplying the IEC and the heat of crystallization is effective as an index of the achievement of both proton conductivity and mechanical durability; that, in the region of the IEC of 1.8 meq/g or more and 3.0 meq/g or less, a physical quantity obtained by multiplying the IEC and the heat of crystallization acts particularly effectively; and that, in a case where the physical quantity is in the range of 35.0 or more and 47.0 or less, both proton conductivity and mechanical durability can be achieved at a comparatively high level.

The product of the IEC and the heat of crystallization is preferably 36.0 or more and 47.0 or less, more preferably 37.0 or more and 44.0 or less, from the above-described viewpoint.

The heat of crystallization of the electrolyte material (II) is designed in such a manner that the product of the IEC and the heat of crystallization is in the above-described range. Specifically, the heat of crystallization is preferably 12.0 J/g or more, more preferably 13.0 J/g or more, particularly preferably 14.0 J/g or more. In addition, the heat of crystallization of the electrolyte material (II) is preferably 25.0 J/g or less, more preferably 24.0 J/g or less, particularly preferably 23.0 J/g or less. The heat of crystallization larger than the above-described range embrittles the electrolyte membrane, and on the other hand, the heat of crystallization smaller than the above-described range decreases the mechanical durability.

The IEC of the electrolyte material (II) can be adjusted, for example, by controlling the density of the sulfonic group of the block copolymer, the amount of the ionic segment contained in the block copolymer, and the like. The heat

of crystallization of the electrolyte material (II) can be adjusted, for example, by controlling the structure of the nonionic segment, the molecular weight of the nonionic segment, the amount of the nonionic segment in the block copolymer, and the like. The details will be described below.

Below, items common to electrolyte materials according to the present invention will be described, including the electrolyte material according to the first embodiment and the electrolyte material according to the second embodiment. In this regard, the phrase "electrolyte material according to the present invention" in the description below obviously encompasses the electrolyte material (I) and the electrolyte material (II).

[Block Copolymer]

An electrolyte material according to the present invention is composed of a block copolymer having an ionic segment and a nonionic segment. In the present invention, the segment is a partial structure of a macromonomer in the block copolymer, in which the macromonomer is used to synthesize the block copolymer. In addition, the nonionic segment is described as containing no ionic group, but may contain an ionic group in a small amount in the range that does not adversely affect the effects of the present invention, particularly the crystallinity.

The block copolymer constituting a polymer electrolyte material according to the present invention has one polymer chain formed by linking two or more kinds of segment chains incompatible with each other, that is, an ionic segment that is a hydrophilic segment and a nonionic segment that is a hydrophobic segment. In the block copolymer, the short-distance interaction caused by the repulsion between chemically different segment chains causes phase separation into nano- or micro-domains composed of the respective segment chains. Then, the segment chains are covalently bound to each other, thus causing a long-distance interaction, and this effect causes each domain to be arranged in a specifically ordered manner. A higher-order structure produced by aggregation of domains composed of the respective segment chains is called a nano- or micro-phase-separation structure. Here, the domain means a mass formed by aggregation of similar segments in one or a plurality of polymer chains. For the ionic conduction of the electrolyte membrane, the spatial arrangement of the ion-conductive segment in the membrane, that is, the nano- or micro-phase-separation structure is important.

[Ionic Segment]

The ionic segment in the block copolymer constituting a polymer electrolyte material according to the present invention is preferably a hydrocarbon polymer from the viewpoints of crystallinity and mechanical durability. Here, being a hydrocarbon means being other than a perfluoro substance, and a hydrocarbon polymer means a polymer other than a perfluoro polymer.

Furthermore, from the viewpoints of crystallinity and mechanical durability, the ionic segment is preferably a hydrocarbon polymer having an aromatic ring in the main chain (hereinafter referred to as an "aromatic hydrocarbon polymer").

The aromatic ring contained in the aromatic hydrocarbon polymer may include not only a hydrocarbon aromatic ring but also a hetero ring. In addition, the polymer may be constituted partially of an aliphatic unit together with the aromatic ring unit. Specific examples of the aromatic hydrocarbon polymer include polymers having, in the main chain, a structure selected from polysulfone, polyether sulfone, polyphenylene oxide, a polyarylene ether polymer, polyphenylene sulfide, polyphenylene sulfide sulfone, polyparaphenylene, a polyarylene polymer, polyarylene ketone, polyether ketone, polyarylene phosphine phoxide, polyether phosphine phoxide, polybenzoxazole, polybenzothiazole, polybenzimidazole, polyamide, polyimide, polyetherimide, and polyimidesulfone together with an aromatic ring. Among these, aromatic polyether polymers are preferable from the viewpoints of cost and polymerizability.

An aromatic polyether polymer refers to a polymer constituted mainly of an aromatic ring, in which polymer the repeating unit contains at least an ether bond as a mode of linking an aromatic ring unit. Examples of the structure of the aromatic polyether polymer include, but are not limited to, an aromatic polyether, aromatic polyether ketone, aromatic polyether imide, aromatic polyether sulfone, and the like. From the viewpoints of chemical stability and cost, an aromatic polyether ketone polymer and an aromatic polyether sulfone polymer are preferable, and from the viewpoints of mechanical durability and physical durability, an aromatic polyether ketone polymer is most preferable.

An aromatic polyether ketone polymer refers to a polymer constituted mainly of an aromatic ring, in which polymer the repeating unit contains at least an ether bond and a ketone bond as modes of linking an aromatic ring unit. Examples of the aromatic polyether ketone polymer include an aromatic polyether ketone, aromatic polyether ether ketone, aromatic polyether ketone ketone, aromatic polyether ether ketone ketone, aromatic polyether ketone ether ketone ketone, and the like.

An aromatic polyether sulfone polymer refers to a polymer constituted mainly of an aromatic ring, in which polymer the repeating unit contains at least an ether bond and a sulfone bond as modes of linking an aromatic ring unit.

An ionic segment to be used in the present invention can be synthesized by aromatic nucleophilic substitution

reaction, coupling reaction, or the like.

The ionic segment is preferably such an aromatic polyether polymer as above-described, and the aromatic polyether polymer preferably contains a structure represented by the following general formula (S1).

[Chem. 3]

$$*\text{-}Ar^1\text{-}Y^1\text{-}Ar^2\text{-}O\text{-}Ar^3\text{-}Y^2\text{-}Ar^4\text{-}O\text{-}* \qquad (S1)$$

In the general formula (S1), $Ar^1$ to $Ar^4$ independently represent a substituted or unsubstituted arylene group, and at least one of $Ar^1$ to $Ar^4$ has an ionic group. $Y^1$ and $Y^2$ independently represent a ketone group or a protective group that may be induced to a ketone group. The symbol * represents a bond with the general formula (S1) or with another constituent unit.

Here, examples of the arylene group represented by $Ar^1$ to $Ar^4$ include, but are not limited to: hydrocarbon arylene groups such as a phenylene group, a naphthylene group, a biphenylene group, and a fluorenediyl group; and heteroarylene groups such as pyridinediyl, quinoxalinediyl, and thiophenediyl. The ionic group is preferably an atomic group having a negative charge, and preferably has a proton exchange capability. Examples of such a functional group include, but are not limited to, a sulfonic group, sulfonimide group, sulfate group, phosphonic group, phosphate group, and carboxylic group.

The above-described ionic group encompasses a structure formed into a salt. Examples of a cation that forms such a salt include an arbitrary metal cation, $NR_4^+$ (wherein R is an arbitrary organic group), and the like. Without particular limitation, the metal cation is preferably Na, K, or Li which is inexpensive, and can easily undergo proton exchange.

The ionic segment can contain two or more kinds of these ionic groups, the combination of which can be suitably determined in accordance with the structure of the block copolymer, or the like. Above all, it is more preferable that the polymer contains at least a sulfonic group, a sulfonimide group, or a sulfate group, from the viewpoint of high proton conductivity, and it is particularly preferable that the polymer contains a sulfonic group, from the viewpoint of raw material cost.

In addition, in the general formula (S 1), $Y^1$ and $Y^2$ are preferably a ketone group or a protective group that may be induced to a ketone group, from the viewpoint of forming a phase-separation structure. That is, the ionic segment is preferably an aromatic polyether ketone polymer. A protective group that may be induced to a ketone group will be described below.

A structure represented by the general formula (S 1) is preferably a structure represented by the following general formula (P1), from the viewpoint of raw material availability, and among these, still more preferably a structure represented by the following general formula (S2), from the viewpoints of raw material availability and polymerizability.

[Chem. 4]

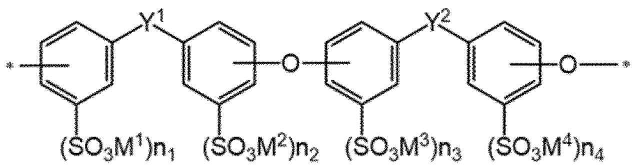

(P1)

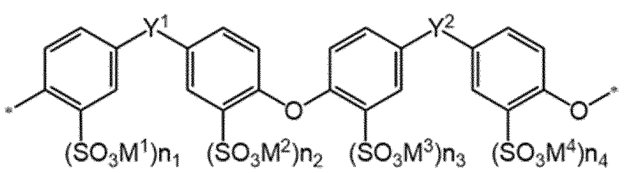

(S2)

In the general formula (P1) and the general formula (S2), $Y^1$ and $Y^2$ independently represent a ketone group or a protective group that may be induced to a ketone group. $M^1$ to $M^4$ independently represent a hydrogen atom, metal cation, or ammonium cation, $n_1$ to $n_4$ are independently 0 or 1, and at least one of $n_1$ to $n_4$ is 1. The symbol * represents a bond with the general formulae (P1) and (S2) or with another constituent unit.

Furthermore, from the viewpoints of raw material availability and polymerizability, $n_1$ = 1, $n_2$ = 1, $n_3$ = 0, and $n_4$ = 0, or $n_1$ = 0, $n_2$ = 0, $n_3$ = 1, and $n_4$ = 1 are most preferable.

Examples of an ionic monomer to be used to synthesize a constituent unit of such an ionic segment as above-described include an aromatic activated dihalide compound. From the viewpoints of chemical stability, production cost, and the possibility of precisely controlling the amount of an ionic group, it is preferable that an aromatic activated dihalide compound having an ion acid group introduced thereinto is used as an aromatic activated dihalide compound to be used in the ionic segment. Suitable specific examples of the monomer having a sulfonic group as an ionic group include, but are not limited to, 3,3'-disulfonate-4,4'-dichlorodiphenyl sulfone, 3,3'-disulfonate-4,4'-difluorodiphenyl sulfone, 3,3'-disulfonate-4,4'-dichlorodiphenyl ketone, 3,3'-disulfonate-4,4'-difluorodiphenyl ketone, 3,3'-disulfonate-4,4'-dichlorodiphenylphenylphosphine oxide, 3,3'-disulfonate-4,4'-difluorodiphenylphenylphosphine oxide, and the like.

From the viewpoints of proton conductivity and hydrolysis resistance, the ionic group is most preferably a sulfonic group, but the monomer having the above-described ionic group may have another ionic group.

Among the above-described monomers having a sulfonic group, 3,3'-disulfonate-4,4'-dichlorodiphenyl ketone and 3,3'-disulfonate-4,4'-difluorodiphenyl ketone are more preferable from the viewpoints of chemical stability and physical durability, and 3,3'-disulfonate-4,4'-difluorodiphenyl ketone is most preferable from the viewpoint of polymerization activity.

An ionic segment synthesized using, 3,3'-disulfonate-4,4'-dichlorodiphenyl ketone or 3,3'-disulfonate-4,4'-difluorodiphenyl ketone as a monomer having an ionic group contains a constituent unit represented by the following general formula (p1), and is preferably used. The aromatic polyether polymer is a component not only characterized by the high crystallinity possessed by a ketone group but also having better hot-water resistance than a sulfone group, is a component effective for a material having excellent dimensional stability, mechanical strength, and physical durability under high-temperature and high-humidity conditions, and thus, is still more preferably used. These sulfonic groups during polymerization are each preferably in the form of a salt with a monovalent cationic species. The monovalent cationic species may be sodium, potassium, another metal species, various amines, or the like, and is not limited to these. These aromatic activated dihalide compounds can be used singly, and a plurality of aromatic activated dihalide compounds can be used in combination.

[Chem. 5]

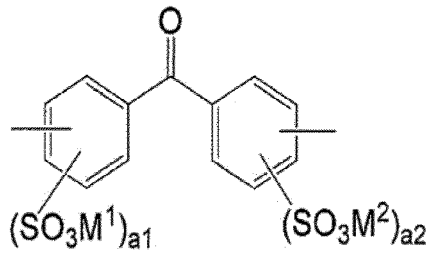

(p1)

(In the general formula (p1), $M^1$ and $M^2$ represent a hydrogen, metal cation, or ammonium cation, and a1 and a2 represent an integer of 1 to 4. A constituent unit represented by the general formula (p1) may be optionally substituted.)

In addition, copolymerizing aromatic activated dihalide compounds, one having an ionic group and the other having no ionic group, makes it possible to control the density of the ionic group. However, from the viewpoint of securing the continuity of the proton conduction path, it is more preferable that, in the ionic segment, an aromatic activated dihalide compound having no ionic group is not copolymerized.

More suitable specific examples of the aromatic activated dihalide compound having no ionic group include 4,4'-dichlorodiphenyl sulfone, 4,4'-difluorodiphenyl sulfone, 4,4'-dichlorodiphenyl ketone, 4,4'-difluorodiphenyl ketone, 4,4'-dichlorodiphenylphenylphosphine oxide, 4,4'-difluorodiphenylphenylphosphine oxide, 2,6-dichlorobenzonitrile, 2,6-difluorobenzonitrile, and the like. Among these, 4,4'-dichlorodiphenyl ketone and 4,4'-difluorodiphenyl ketone are more preferable from the viewpoints of crystallization, mechanical strength, physical durability, and hot-water resistance, and 4,4'-difluorodiphenyl ketone is most preferable from the viewpoint of polymer activity. These aromatic activated dihalide compounds can be used singly, and a plurality of aromatic activated dihalide compounds can be used in combination.

A polymer electrolyte material synthesized using 4,4'-dichlorodiphenyl ketone or 4,4'-difluorodiphenyl ketone as an aromatic activated dihalide compound further contains a constituent site represented by the following general formula (p2), and is preferably used. The constituent unit becomes a component that affords an intermolecular cohesive force and crystallinity, becomes a material having excellent dimensional stability, mechanical strength, and physical durability under high-temperature and high-humidity conditions, and thus is preferably used.

[Chem. 6]

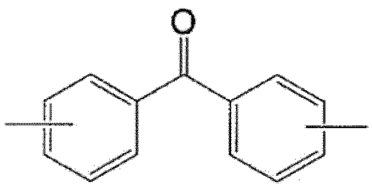

(p2)

(A constituent unit represented by the general formula (p2) may be optionally substituted, but contains no ionic group.)

In addition, a nonionic monomer to be used to synthesize an ionic segment is, for example, an aromatic diphenol compound, and is preferably an aromatic diphenol compound having the below-described protective group, in particular.

As above, monomers to be used to synthesize a constituent unit of the ionic segment have been described.

The ionic segment or a constituent unit constituting the ionic segment can contain a structure represented by the following general formulae (T1) and (T2) other than a structure represented by the general formula (S1).

[Chem. 7]

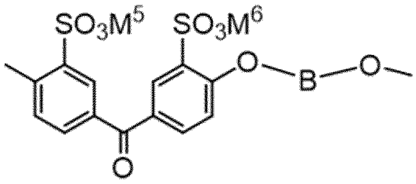

(T1)

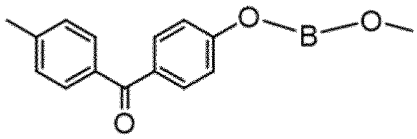

(T2)

In the general formulae (T1) and (T2), B represents a divalent organic group containing an aromatic ring. $M^5$ to $M^6$ independently represent a hydrogen atom, metal cation, or ammonium cation.

In this aromatic polyether ketone copolymer, changing the compositional ratio of the constituent units represented by the general formulae (T1) and (T2) makes it possible to control the ion exchange capacity.

The ionic segment particularly preferably has a structure represented by the general formula (P1) and structures represented by the general formulae (T1) and (T2). Assuming that, in such an ionic segment, the amounts of the constituent units represented by the general formulae (P1), (T1), and (T2) are p1, t1, and t2 respectively, p1 is preferably 75 parts by mole or more, more preferably 90 parts by mole or more, still more preferably 100 parts by mole or more, with respect to 100 parts by mole of the total molar amount of t1 and t2.

Examples of the divalent organic group B containing an aromatic ring in the general formulae (T1) and (T2) include: residues of various divalent phenol compounds that can be used to polymerize an aromatic polyether polymer by aromatic nucleophilic substitution reaction; and such a residue into which a sulfonic group has been introduced.

Specific suitable examples of the divalent organic group B containing an aromatic ring include, but are not limited to, a group represented by the following general formulae (X'-1) to (X'-6).

[Chem. 8]

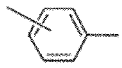

(X'-1)

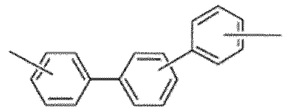

(X'-4)

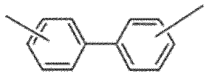

(X'-2)

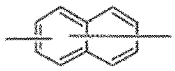

(X'-3)

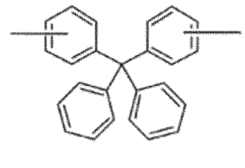

(X'-5)

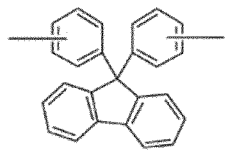

(X'-6)

These may have an ionic group or an aromatic group. In addition, these can be used in combination, if required. Among these, groups represented by the general formulae (X'-1) to (X'-4) are more preferable, and groups represented by the general formulae (X'-2) and (X'-3) are most preferable, from the viewpoints of crystallinity, dimensional stability, toughness, and chemical stability.

[Nonionic Segment]

The nonionic segment constituting a block copolymer according to the present invention is preferably a hydrocarbon polymer, more preferably an aromatic hydrocarbon polymer, from the viewpoints of crystallinity and mechanical durability. Here, the definition of the hydrocarbon polymer and specific examples of the aromatic hydrocarbon polymer are as above-described.

Among the aromatic hydrocarbon polymers, aromatic polyether polymers are preferable from the viewpoints of cost and polymerizability. Aromatic polyether ketone polymers and aromatic polyether sulfone polymers are preferable from the viewpoints of mechanical durability and physical durability. Aromatic polyether ketone polymers are particularly preferable.

The nonionic segment is preferably such an aromatic polyether polymer as above-described, and the aromatic polyether polymer preferably contains a structure represented by the following general formula (S3).
[Chem. 9]

$$*\text{-}Ar^5\text{-}Y^3\text{-}Ar^6\text{-}O\text{-}Ar^7\text{-}Y^4\text{-}Ar^8\text{-}O\text{-}* \qquad (S3)$$

In the general formula (S3), $Ar^5$ to $Ar^8$ independently represent a substituted or unsubstituted arylene group with the proviso that none of $Ar^5$ to $Ar^8$ has an ionic group. $Y^3$ and $Y^4$ independently represent a ketone group or a protective group that may be induced to a ketone group. The symbol * represents a bond with the general formula (S3) or with another constituent unit.

Here, examples of the arylene group represented by $Ar^5$ to $Ar^8$ include, but are not limited to: hydrocarbon arylene groups such as a phenylene group, a naphthylene group, a biphenylene group, and a fluorenediyl group; and heteroarylene groups such as pyridinediyl, quinoxalinediyl, and thiophenediyl.

In addition, in the general formula (S3), $Y^3$ and $Y^4$ are a ketone group or a protective group that may be induced to a ketone group, from the viewpoint of forming a phase-separation structure. Thus, the block copolymer is crystalline, and makes it easy to form a phase-separation structure. That is, the nonionic segment is preferably an aromatic polyether ketone polymer.

A structure represented by the general formula (S3) preferably contains a structure represented by the following general formula (P2), from the viewpoint of raw material availability, and among these, more preferably contains a constituent unit represented by the following general formula (S4), from the viewpoints of mechanical durability, dimensional stability, and physical durability that are due to crystallinity.

[Chem. 10]

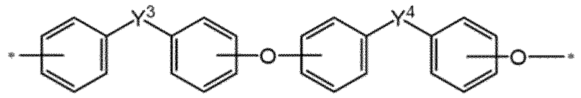

(P2)

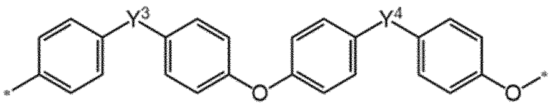

(S4)

In the general formulae (P2) and (S4), $Y^3$ and $Y^4$ independently represent a ketone group or a protective group that may be induced to a ketone group. The symbol * represents a bond with the general formulae (P2) and (S4) or with another constituent unit.

The amount of a structure represented by the general formula (P2) or (S4) and contained in the nonionic segment is preferably 20 mol% or more, more preferably 50 mol% or more, particularly preferably 80 mol% or more, from the viewpoints of mechanical durability, dimensional stability, and physical durability.

The protective group that may be induced to a ketone group preferably contains, for example, at least one selected from the following general formula (P3) or (P4).

[Chem. 11]

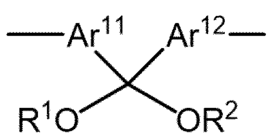

(P3)

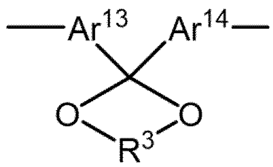

(P4)

(In the general formulae (P3) and (P4), $Ar^{11}$ to $Ar^{14}$ represent an arbitrary divalent arylene group; $R^1$ and $R^2$ represent at least one group selected from H or an alkyl group; $R^3$ represents an arbitrary alkylene group; and each of $Ar^{11}$ to $Ar^{14}$ may represent two or more groups. A group represented by the general formulae (P3) and (P4) may be optionally substituted.)

$R^1$ and $R^2$ in the general formula (P3) are more preferably an alkyl group, still more preferably a $C_{1-6}$ alkyl group, most preferably a $C_{1-3}$ alkyl group, from the viewpoint of stability. In addition, $R^3$ in the general formula (P4) is more preferably a $C_{1-7}$ alkylene group, most preferably a $C_{1-4}$ alkylene group, from the viewpoint of stability. Specific examples of $R^3$ include, but are not limited to, $-CH_2CH_2-$, $-CH(CH_3)CH_2-$, $-CH(CH_3)CH(CH_3)-$, $-C(CH_3)_2CH_2-$, $-C(CH_3)_2CH(CH_3)-$, $-C(CH_3)_2O(CH_3)_2-$, $-CH_2CH_2CH_2-$, $-CH_2C(CH_3)_2CH_2-$, and the like.

An organic group preferable as $Ar^{11}$ to $Ar^{14}$ in the general formulae (P3) and (P4) is a phenylene group, naphthylene group, or biphenylene group. These may be optionally substituted. In the aromatic polyether polymer, $Ar^{13}$ and $Ar^{14}$ in the general formula (P4) are more preferably a phenylene group from the viewpoints of solubility and easy raw material availability. $Ar^{13}$ and $Ar^{14}$ are most preferably ap-phenylene group.

Here, examples of a method of protecting a ketone site with a ketal include a method in which a precursor compound having a ketone group is allowed to react with a monofunctional and/or bifunctional alcohol in the presence of an acid catalyst. For example, such a protected ketone site can be produced by allowing 4,4'-dihydroxybenzophenone as a ketone precursor to react in the presence of an acid catalyst such as hydrogen bromide in a monofunctional and/or bifunctional alcohol or a solvent of an aliphatic or aromatic hydrocarbon or the like. The alcohol is a $C_{1-20}$ aliphatic alcohol.

An improving method of producing a ketal monomer is composed of allowing 4,4'-dihydroxybenzophenone as a ketone precursor to react with a bifunctional alcohol in the presence of an alkyl ortho ester and a solid catalyst.

A method of deprotecting at least part of the ketone sites protected with ketals, and thus restoring the ketone sites is subject to no particular limitation. The deprotection reaction can be performed in the presence of water and acid

under ununiform or uniform conditions, and from the viewpoints of mechanical strength, physical durability, and solvent resistance, a method in which the material is molded in membrane form or the like, and then acid-treated is more preferable.
Specifically, the membrane molded can be immersed in an aqueous hydrochloric acid solution or an aqueous sulfuric acid solution to be deprotected, and the concentration of the acid and the temperature of the aqueous solution can be selected suitably.

The weight ratio of the acidic aqueous solution needed for the polymer is preferably 1 to 100, and it is possible to use an even larger amount of water. The acid catalyst is preferably used at a concentration of 0.1 to 50 wt% with respect to the water present. Examples of suitable acid catalysts include: strong mineral acids such as hydrochloric acid, nitric acid, fluorosulfonic acid, and sulfuric acid; and strong organic acids such asp-toluene sulfonic acid and trifluoromethanesulfonic acid. The acid catalyst, the amount of excess water, the reaction pressure, and the like can be selected suitably in accordance with the thickness of the polymer membrane and with the like.

For example, in cases where the membrane has a thickness of 50 μm, immersing the membrane in an acidic aqueous solution, for example, an aqueous solution of 6 N hydrochloric acid, and heating the membrane at 95°C for 1 to 48 hours makes it possible to deprotect substantially the whole amount of the membrane easily. In addition, even if the polymer is immersed in an aqueous solution of 1 N hydrochloric acid at 25°C for 24 hours, the majority of the protective groups can undergo deprotection. However, the deprotection is not limited to these conditions, and the deprotection may be performed with acidic gas, organic acid, or the like, or the deprotection may be performed by heat treatment.

In cases where the aromatic polyether polymer contains a linking mode such as a direct bond other than an ether bond, the position of the protective group to be introduced is more preferably an aromatic ether polymer portion from the viewpoint of enhancing the processability.

Specifically, for example, an aromatic polyether polymer containing a constituent unit represented by the general formulae (P3) and (P4) can be synthesized by an aromatic nucleophilic substitution reaction with an aromatic activated dihalide compound, using compounds represented by the following general formulae (P3-1) and (P4-1) respectively as aromatic diphenol compounds. The constituent unit represented by the general formulae (P3) and (P4) may be derived from either an aromatic diphenol compound or an aromatic activated dihalide compound. A constituent unit derived from an aromatic diphenol compound is more preferably used, considering the reactivity of the monomer.

[Chem. 12]

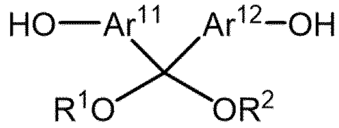

(P3-1)

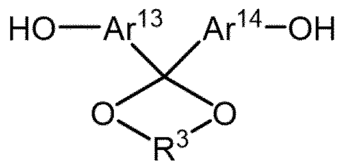

(P4-1)

(In the general formulae (P3-1) and (P4-1), $Ar^{11}$ to $Ar^{14}$ represent an arbitrary divalent arylene group; $R^1$ and $R^2$ represent at least one group selected from H or an alkyl group; and $R^3$ represents an arbitrary alkylene group. A compound represented by the general formula (P3-1) and the general formula (P4-1) may be optionally substituted.) As above, preferable protective groups have been described.

[Detailed Description of Block Copolymer]

In the block copolymer constituting a polymer electrolyte material according to the present invention, the ionic segment and the nonionic segment are each preferably an aromatic polyether polymer, and furthermore, is preferably an aromatic polyether ketone polymer. The IEC and the heat of crystallization can be adjusted by controlling the molecular structure of each segment, the molecular weight of each segment, the ratio between the molecular weights of both segments, the density of the sulfonic group, and the like in such a block copolymer.

The IEC of the block copolymer can be adjusted, for example, by controlling the density of the sulfonic group of the ionic segment and the amount of the ionic segment contained in the block copolymer.

In addition, the saturated crystallinity and heat of crystallization of the block copolymer can be adjusted, for

example, by adjusting the molecular weight of the nonionic segment and the amount of the nonionic segment in the block copolymer. Specifically, bringing the number-average molecular weight of the nonionic segment to 15,000 or more makes it possible to increase the saturated crystallinity and heat of crystallization of the block copolymer to a desired range. That is, the nonionic segment constituting a block copolymer in the present invention is more preferably an aromatic polyether ketone polymer having a number-average molecular weight of 15,000 or more.

In particular, a block copolymer constituting a polymer electrolyte material according to the present invention preferably contains an ionic segment containing a constituent unit represented by the general formula (S1) and a nonionic segment containing a constituent unit represented by the general formula (S3).

In cases where the nonionic segment contains a constituent unit represented by the general formula (S3), the segment is crystalline, and controlling the molecular weight of this nonionic segment and the amount of the nonionic segment in the block copolymer makes it possible to adjust the saturated crystallinity and the heat of crystallization as desired.

The block copolymer containing a nonionic segment containing a constituent unit represented by the general formula (S3) can be produced, for example, by molding a block copolymer precursor in which a protective group is introduced into at least a nonionic segment, and then deprotecting at least part of the protective group contained in the molded product. A block copolymer more tends to have poor processability than a random copolymer owing to the crystallization of the polymer having a domain formed therein, and accordingly, it is preferable to introduce a protective group into at least a nonionic segment to enhance the processability, and, in a case where the processability becomes poorer, a protective group is preferably introduced also into the ionic segment.

A block copolymer constituting a polymer electrolyte material according to the present invention has a phase-separation structure. That is, in a block copolymer according to the present invention having an ionic segment and a nonionic segment, a hydrophilic domain formed by aggregation of the ionic segments has a high ionic group concentration locally, and thus, exhibits excellent proton conductivity. The hydrophobic domain formed by aggregation of nonionic segments has strong intermolecular interaction due to crystallinity, and thus, exhibits excellent dimensional stability.

Having aromatic polyether polymers, preferably aromatic polyether ketone polymers, as both of the ionic segment and the nonionic segment that constitute the block copolymer makes it easy to form a phase-separation structure. Furthermore, from the above-described viewpoint, a block copolymer in the present invention preferably contains an ionic segment containing a constituent unit represented by the general formula (S 1) and a nonionic segment containing a constituent unit represented by the general formula (S3).

In addition, a block copolymer constituting a polymer electrolyte material according to the present invention preferably contains one or more linker sites that link the ionic segment with the nonionic segment. Such a block copolymer makes it easier to form a co-continuous or lamellar phase-separation structure, and thus, is more preferable.

The above-described linker is a site that links the ionic segment with the nonionic segment, and is defined as a site different in the chemical structure from the ionic segment and the nonionic segment.

The linker has the capability to link different segments while inhibiting the randomization of the copolymer due to an ether exchange reaction, the scission of the segment, a side reaction that can occur during the synthesis of a copolymer, and the like. Accordingly, using, as a raw material, a compound that gives such a linker makes it possible to obtain a block copolymer without decreasing the molecular weight of each segment. Examples of the linker include, but are not limited to, decafluorobiphenyl, hexafluorobenzene, 4,4'-difluorodiphenyl sulfone, 2,6-difluorobenzonitrile, and the like.

Controlling the number-average molecular weight of each of the ionic segment and the nonionic segment that constitute a block copolymer constituting a polymer electrolyte material according to the present invention makes it possible to adjust, within the above-described desired range, the IEC, saturated crystallinity, and heat of crystallization of the block copolymer and the average period size of the phase-separation structure. For example, the number-average molecular weight of the ionic segment is preferably in the range of from 10,000 to 150,000, more preferably in the range of from 20,000 to 120,000, particularly preferably in the range of from 45,000 to 100,000, from the viewpoint of adjusting the IEC and the average period size of the phase-separation structure to the desired range. On the other hand, the number-average molecular weight of the nonionic segment is preferably in the range of from 5,000 to 50,000, more preferably in the range of from 10,000 to 40,000, particularly preferably in the range of from 15,000 to 30,000, from the viewpoint of adjusting the saturated crystallinity, the heat of crystallization, and the average period size of the phase-separation structure to the desired ranges.

To make the number-average molecular weight of the ionic segment comparatively large, for example, to adjust the number-average molecular weight to 45,000 or more, the constituent units in the ionic segment are preferably linked with each other via a linker. Using a linker makes it comparatively easy to synthesize a long-chain polymer. Examples of the linker include, but are not limited to, decafluorobiphenyl, hexafluorobenzene, 4,4'-difluorodiphenyl sulfone, 2,6-difluorobenzonitrile, and the like.

In addition, assuming that, with reference to a block copolymer constituting a polymer electrolyte material according to the present invention, the number-average molecular weight of the ionic segment is Mn1, and the number-average molecular weight of the nonionic segment is Mn2, it is preferable that the following formula 1 is satisfied, and it is more preferable that the following formula 2 is satisfied. Such a block copolymer is preferable from the viewpoint of adjusting the IEC, the heat of crystallization, and the average period size of the phase-separation structure to the above-described ranges.

$$1.7 \leq \text{Mn1} / \text{Mn2} \leq 7.0 \quad \text{(Formula 1)}$$

$$2.0 \leq \text{Mn1} / \text{Mn2} \leq 5.0 \quad \text{(Formula 2)}$$

In particular, it is preferable, from the viewpoint of adjusting the IEC, the saturated crystallinity, the heat of crystallization, and the average period size of the phase-separation structure to the above-described ranges, that the number-average molecular weight (Mn2) of the nonionic segment is 15,000 or more, and that the formulae 1 and 2 are satisfied.

Specific examples of a method of synthesizing a block copolymer constituting a polymer electrolyte material according to the present invention will be described below. However, the present invention is not limited to these.

Each segment in a block copolymer constituting a polymer electrolyte material according to the present invention is preferably synthesized by an aromatic nucleophilic substitution reaction from the viewpoint of easiness in processes. The aromatic nucleophilic substitution reaction is a method in which a monomer mixture of a dihalide compound and a diol compound is allowed to react in the presence of a basic compound. The polymerization can be performed in the temperature range of from 0 to 350°C, preferably at a temperature of 50 to 250°C. The reaction can be performed in the presence of no solvent, but preferably performed in the presence of a solvent. Examples of solvents that can be used include: aprotic polar solvents such as *N,N*-dimethylacetoamide, *N,N*-dimethylformamide, N-methyl-2-pyrrolidone, dimethyl sulfoxide, sulfolane, 1,3-dimethyl-2-imidazolidinone, and hexamethylphosphon triamide. The solvent is not limited to these, and can be a solvent that can be used as a stable solvent in an aromatic nucleophilic substitution reaction. These organic solvents may be used singly or in mixture of two or more kinds thereof.

Examples of basic compounds include sodium hydroxide, potassium hydroxide, sodium carbonate, potassium carbonate, sodium hydrogencarbonate, potassium hydrogencarbonate, and the like. Without limitation to these, a basic compound that makes it possible to form a diol into an active phenoxide structure can be used. In addition, to increase the nucleophilicity of the phenoxide, a crown ether such as 18-crown-6 is suitably added. In some cases, a crown ether coordinates to a sodium ion or potassium ion of a sulfonic group to enhance the solubility of the sulfonate moiety of a monomer or a polymer in an organic solvent, and thus, can be preferably used.

In an aromatic nucleophilic substitution reaction, water is generated as a byproduct in some cases. In this case, it is also possible that, independent of a polymerization solvent, toluene or the like is allowed to coexist in a reaction system to form an azeotrope, in the form of which water can be removed out of the system. In a method of removing water out of the system, a water absorbing agent such as a molecular sieve can be used.

A block copolymer constituting a polymer electrolyte material according to the present invention can be produced, for example, by synthesizing a block copolymer precursor, and then deprotecting at least part of the protective groups contained in the precursor. A method of producing a block copolymer and a block copolymer precursor according to the present invention preferably includes at least the following steps (1) to (2). Including these steps makes it possible to achieve the enhancement of mechanical durability and durability due to a higher molecular weight, and introducing both segments alternately makes it possible to obtain a block copolymer in which the phase-separation structure and the size of the domain are strictly controlled, and which has excellent low-humidity proton conductivity.

Step (1): a step in which -OM groups at both ends of a segment are allowed to react with linker compounds to introduce linker sites into both ends of the segment, in which the segment is one of an ionic segment having -OM groups (M represents a hydrogen atom, metal cation, or ammonium cation) at both ends thereof and a nonionic segment having -OM groups at both ends thereof.

Step (2): a step in which the linker sites introduced into both ends of one of the segments synthesized in the step (1) are polymerized with the -OM groups at both ends of the other segment to produce a block copolymer or block copolymer precursor having an ionic segment and a nonionic segment.

Specific examples of the segment both ends of which are each a -OM group, and which is represented by the general formula (S1) and the segment both ends of which are each a -OM group, and which is represented by the general formula (S2) include segment structures represented by the following general formulae (H3-1) and (H3-2) respectively. In addition, examples of a structure formed by allowing a segment having a structure represented by each of the general formulae (H3-1) and (H3-2) to react with a halide linker include a structure represented by each of the following general formulae (H3-3) and (H3-4) respectively. However, the present invention is not limited to these.

[Chem. 13]

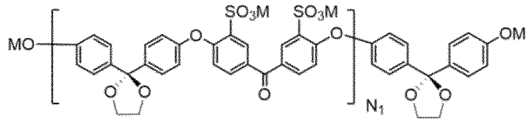
(H3-1)

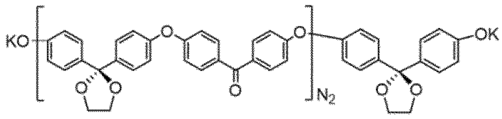
(H3-2)

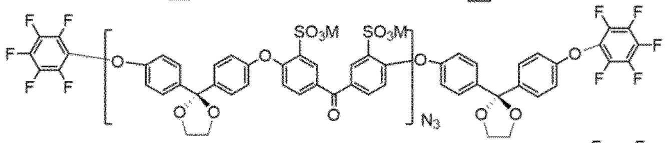
(H3-3)

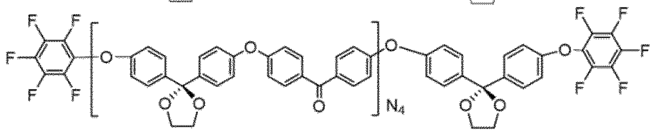
(H3-4)

In the general formulae (H3-1) to (H3-4), $N_1$, $N_2$, $N_3$, and $N_4$ independently represent an integer of 1 to 200.

In cases where the ionic segment has a linker, specific examples of the ionic segment obtained by the step (1), and having a linker site introduced thereinto include structures represented by the following general formulae (H3-1L) and (H3-3L). However, the present invention is not limited to these.

[Chem. 14]

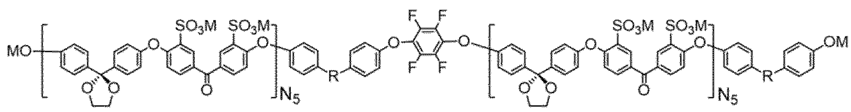
(H3-1L)

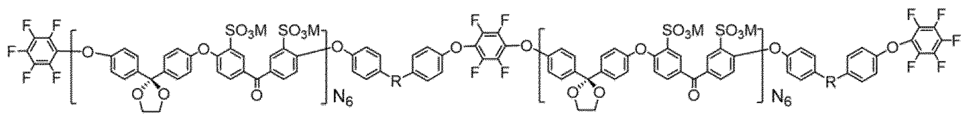
(H3-3L)

In the general formulae (H3-1L) and (H3-3L), N5 and N6 independently represent an integer of 1 to 200.

In the general formulae (H3-1) to (H3-4), (H3-1L), and (H3-3L), a halogen atom is represented by F, a -OM end group is represented by a -OK group, and an alkali metal is represented by one of Na and K, but the components can be used without limitation to these. In addition, these general formulae are inserted in order to help the readers' understanding, and do not always accurately represent the chemical structures, accurate compositions, and arrangements of the polymerization components of a polymer and the position, number, molecular weight, and the like of a sulfonic group. The materials are not limited to these formulae.

Furthermore, in the general formulae (H3-1) to (H3-4), (H3-1L), and (H3-3L), a ketal group is introduced as a protective group into each of the segments, but in the present invention, a protective group can be introduced into a

component having high crystalline and low solubility. Accordingly, the above-described ionic segment does not always need a protective group, and an ionic segment having no protective group can be preferably used from the viewpoints of durability and dimensional stability.

[Molded Polymer Electrolyte Product]

An electrolyte material according to the present invention is suitable as a molded polymer electrolyte product. Here, a molded polymer electrolyte product means a molded product containing an electrolyte material according to the present invention. Examples of such a molded polymer electrolyte product include membranes (including films and film-like forms), plates, fibers, hollow fibers, particles, lumps, micropores, coatings, foams, and the like. The shape to be taken can be different depending on the usage. Among these, membranes are preferable from the viewpoint of usability in a wide range of usage. Hereinafter, a molded polymer electrolyte product in the form of a membrane is referred to as a "molded electrolyte membrane". Hereinafter, a molded polymer electrolyte product will be described taking a molded electrolyte membrane as a typical example, but the present invention is not limited to this.

Examples of a method of producing a molded electrolyte membrane include: a method in which a membrane is formed from a solution at a stage where the polymer has a protective group such as a ketal; a method in which a membrane is formed from the molten polymer; and the like. The former method is, for example, a method in which an electrolyte material is dissolved in a solvent such as *N*-methyl-2-pyrrolidone, the resulting solution is applied by cast coating to a glass plate, a polyethylene terephthalate film (hereinafter referred to as a PET film), or the like, and the solvent is removed to give a membrane.

A solvent to be used to form a membrane is desirably a solvent that can dissolve an electrolyte material, and then removed. Examples of the solvent to be used suitably include: aprotic polar solvents such as *N,N*-dimethylacetoamide, *N,N*-dimethylformamide, *N*-methyl-2-pyrrolidone, dimethyl sulfoxide., sulfolane, 1,3-dimethyl-2-imidazolidinone, and hexamethylphosphon triamide; ester solvents such as $\gamma$-butyrolactone and butyl acetate; carbonate solvents such as ethylene carbonate and propylene carbonate; alkylene glycol monoalkyl ethers such as ethylene glycol monomethyl ether, ethylene glycol monoethyl ether, propylene glycol monomethyl ether, and propylene glycol monoethyl ether; alcohol solvents such as isopropanol; water; and mixtures thereof. Aprotic polar solvents have the highest solubility, and are preferable. In addition, to increase the solubility of the ionic segment, a crown ether such as 18-crown-6 is suitably added.

Examples of a method of converting an electrolyte material according to the present invention to a molded electrolyte membrane include a method in which a membrane constituted of the electrolyte material is formed by the above-described technique, and then, at least part of the sites protected with protective groups are deprotected. For example, in cases where the material has ketal sites as protective groups, at least part of the ketone sites protected with ketals are deprotected to be restored to ketone sites. This method makes it possible to form a membrane with a solution of a block copolymer lacking in solubility, and to achieve proton conductivity together with mechanical durability and physical durability.

In addition, forming a membrane in a state in which the ionic group contained is in the form of a salt with a cation of an alkali metal or an alkaline earth metal may be followed by a step in which the cation of the alkali metal or the alkaline earth metal is exchanged with a proton. This step is preferably a step in which a membrane molded is brought into contact with an acidic aqueous solution, more preferably, in particular, a step in which a membrane molded is immersed in an acidic aqueous solution. In this step, the proton in the acidic aqueous solution is substituted with the cation that is ionically bonded to the ionic group, and residual water-soluble impurities, residual monomers, solvents, residual salts, and the like are simultaneously removed.

The acidic aqueous solution is not particularly limited, and sulfuric acid, hydrochloric acid, nitric acid, acetic acid, trifluoromethanesulfonic acid, methanesulfonic acid, phosphoric acid, citric acid, or the like is preferably used. The temperature and concentration of the acidic aqueous solution are appropriately determined. From the viewpoint of productivity, it is preferable to use an aqueous solution of 3 mass% or more and 30 mass% or less sulfuric acid at a temperature of 0°C or more and 80°C or less.

The thickness of a molded electrolyte membrane according to the present invention is preferably 1 $\mu$m or more, more preferably 2 $\mu$m or more, particularly preferably 3 $\mu$m or more, from the viewpoints of mechanical durability and physical durability. On the other hand, the thickness is preferably 500 $\mu$m or less, more preferably 300 $\mu$m or less, particularly preferably 200 $\mu$m or less, from the viewpoint of power generation performance.

In addition, the molded electrolyte membrane may contain an additive to be used for an ordinary polymer compound, such as a crystallization nucleating agent, plasticizer, stabilizer, antioxidant, or mold release agent to the extent that is not contrary to an object of the present invention.

In addition, for the purpose of enhancing the mechanical strength, thermal stability, processability, and the like, the molded electrolyte membrane may contain various kinds of polymer, elastomer, filler, microparticle, additive, and/or the like to the extent that does not adversely affect the various characteristics mentioned earlier. In addition, the molded

electrolyte membrane may be reinforced with a microporous membrane, nonwoven fabric, mesh, or the like.

The molded electrolyte membrane can be used in various uses. For example, the molded electrolyte membrane can be applied to medical uses such as artificial skin, filtration uses, ion-exchange resin uses such as chlorine-resistant reverse osmosis membranes, various structural material uses, electrochemical uses, humidifying membranes, antifogging films, antistatic films, deoxidation films, solar battery films, and gas barrier films. Above all, the molded electrolyte membrane can be more preferably used in various electrochemical uses. Examples of the electrochemical uses include polymer electrolyte fuel cells, redox-flow batteries, water electrolysis apparatuses, chlor-alkali electrolysis apparatuses, electrochemical hydrogen pumps, water electrolysis hydrogen generators, and the like.

In the polymer electrolyte fuel cell, electrochemical hydrogen pump, or water electrolysis hydrogen generator, the molded electrolyte membrane is used in the form of a structure having a catalyst layer, electrode substrate, and separator sequentially stacked on each of both sides of the molded electrolyte membrane. Among these, a molded electrolyte membrane on each of both sides of which a catalyst layer is stacked (that is, a laminate having a layer structure of catalyst layer/molded electrolyte membrane/catalyst layer) is referred to as a catalyst coated membrane (CCM). Furthermore, a laminate including a catalyst layer and a gas diffusion substrate sequentially stacked on each of both sides of the molded electrolyte membrane (that is, a laminate having a layer structure of gas diffusion substrate/catalyst layer/molded electrolyte membrane/catalyst layer/gas diffusion substrate) is referred to as a membrane electrode assembly (MEA). An electrolyte material according to the present invention is particularly suitable as a molded electrolyte membrane that constitutes such a CCM or MEA.

The molded electrolyte membrane can be produced, for example, by cast-coating a support base material (a glass plate, PET film, or the like) with an electrolyte solution in which an electrolyte material is dissolved or dispersed in a suitable solvent, and by drying the resulting coating. A molded electrolyte membrane obtained in this manner is acid-treated, as required, then washed with water, and dried. In the drying step, the crystallinity of the molded electrolyte membrane can be increased by drying at a temperature equal to or higher than the glass transition temperature of the electrolyte material, or by heating at the temperature after drying. When performing this, controlling the heating temperature and the heating time makes it possible to adjust the crystallinity of the molded electrolyte membrane.

In addition, in the hot-pressing step in the production of the above-described catalyst coated membrane (CCM), controlling the heating temperature and the pressing pressure makes it possible to adjust the crystallinity of the molded electrolyte membrane.

## EXAMPLES

The present invention will be specifically described with reference to Examples. However, the present invention is not limited to these Examples. The measuring methods used in the present Examples are described below. In this regard, in cases where, in the following measuring method, measurement with a block copolymer was difficult, or the measurement accuracy was doubted, the below-described electrolyte membrane was used as an analyte in place of a block copolymer.

<Production of Electrolyte Membrane (Analyte)>

A 25 wt% N-methylpyrrolidone (NMP) solution in which a block copolymer was dissolved was filtrated under pressure using a glass fiber filter, then applied to a glass base plate by cast coating, dried at 100°C for 4 hours, and then heat-treated under nitrogen at 150°C for 10 minutes to obtain a membrane having a thickness of 10 μm. Then, this membrane was immersed in an aqueous 10 wt% sulfuric acid solution at 95°C for 24 hours to undergo proton exchange and deprotection reaction, then immersed in a large excess amount of pure water for 24 hours to be thoroughly washed, and dried to obtain an electrolyte membrane. The crystallinity of this electrolyte membrane (analyte) was 0% by wide-angle X-ray diffraction (XRD).

(1) Molecular Weight of Polymer

The number-average molecular weight and weight-average molecular weight of a polymer were measured by GPC. Using HLC-8022GPC manufactured by Tosoh Corporation as an integrated device of an ultraviolet detector and a differential refractometer, using a TSKgel Guard Column SuperH-H column (having an inner diameter of 4.6 mm and a length of 3.5 cm) manufactured by Tosoh Corporation as a guard column, and using two TSKgel SuperHM-H columns (having an inner diameter of 6.0 mm and a length of 15 cm) manufactured by Tosoh Corporation as GPC columns, the measurement was performed with an N-methyl-2-pyrrolidone solvent (N-methyl-2-pyrrolidone solvent containing 10 mmol/L lithium bromide) at a sample concentration of 0.1 wt%, at a flow rate of 0.2 mL/min, at a temperature of 40°C, and at a measuring wavelength of 265 nm, and the number-average molecular weight and the weight-average molecular weight were determined in terms of standard polystyrene.

(2) Ion Exchange Capacity (IEC)

The ion exchange capacity was measured by the neutralization titration method described in 1) to 4) below. The measurement was performed three times, and the average of the three measurements was adopted.

1) A block copolymer was subjected to proton exchange, and thoroughly washed with pure water, and water was wiped off. Then, the block copolymer was vacuum-dried at 100°C for 12 hours or more, and the dry weight of the membrane was obtained.
2) To the block copolymer, 50 mL of an aqueous 5 wt% sodium sulfate solution was added, and the resulting mixture was left to stand for 12 hours to undergo ion exchange.
3) The sulfuric acid generated was titrated using an aqueous 0.01 mol/L sodium hydroxide solution. A commercially available 0.1 w/v% phenolphthalein solution for titration was added as an indicator, and the point at which the solution turned pale red-purple was taken as the end point.
4) The IEC was determined in accordance with the following formula.

IEC (meq/g) = [concentration (mmol/mL) of aqueous sodium hydroxide solution × dropping amount (mL) of aqueous sodium hydroxide solution] / dry weight (g) of sample

(3) Measurement of Glass Transition Temperature Tg

An electrolyte material in an amount of 10 mg was placed in a DSC device, and predried at 110°C for 3 hours. Then, the analyte was heated to 200°C under the below-described conditions without being taken out of the DSC device, and subjected to a temperature modulating differential scanning calorimetry analysis in the heating stage. When this was done, the glass transition temperature was defined as a midpoint of two intersections obtained by two extensions of the baseline and the tangent line to the endothermic curve.

DSC device: DSC7000X (manufactured by Hitachi High-Technologies Corporation)
Measurement temperature range: 30°C to 200°C
Temperature control: A/C temperature control
Heating rate: 2°C/min
Amplitude: ±3°C
Frequency applied: 0.02 Hz
Sample pan: aluminum crimped pan
Atmosphere for measurement and predrying: nitrogen, 100 mL/min
Predrying: at 110°C for 3 hours.

(4) Measurement of Saturated Crystallinity

From an electrolyte membrane (analyte), a square piece, 5 cm × 5 cm, was cut out. This analyte was sandwiched between two polyimide films (having a thickness of 50 μm). The resulting piece was hot-pressed using a hot-press device at a pressure of 4.5 Mpa at a temperature of the glass transition temperature of each block copolymer + 5°C for 5 minutes, after which the crystallinity was measured. This operation was repeated. The crystallinity a change in which was no longer caused was regarded as the saturated crystallinity. The method of measuring the crystallinity is described below.

<Measurement of Crystallinity by Wide-angle X-ray Diffraction (XRD)>

The analyte hot-pressed was set in a diffractometer, and measured by X-ray diffraction under the following conditions.

X-ray diffractometer: RINT2500V manufactured by Rigaku Corporation
X ray: Cu-Kα
X-ray output: 50 kV-300 mA
Optical system: focusing optical system

Scanning rate: 2θ = 2°/min
Scanning method: 2θ-θ
Scanning range: 2θ = 5 to 60°
Slit: divergence slit-1/2°, receiving slit-0.15 mm, scattering slit-1/2°

Profile fitting of the results of measurement of X-ray diffraction was performed to separate the components. The diffraction angle and integrated intensity of each component were determined. The integrated intensities of the resulting crystal peak and amorphous halo were used to calculate the crystallinity in accordance with the calculating equation in the following general formula (s2).

$$\text{Crystallinity (\%)} = \text{(sum of integrated intensities of all crystal peaks) / (sum of integrated intensities of all crystal peaks and amorphous halos)} \times 100 \ldots \text{(s2)}$$

(5) Measurement of Heat of Crystallization by Differential Scanning Calorimetry Analysis (DSC)

An electrolyte membrane (analyte) in an amount of 10 mg was placed in a DSC device, and predried at 110°C for 3 hours. Then, the analyte was heated to 200°C under the below-described conditions without being taken out of the DSC device, and subjected to a temperature modulating differential scanning calorimetry analysis in the heating stage.

- Measurement temperature range: 30°C to 200°C
- Temperature control: A/C temperature control
- Heating rate: 2°C/min
- Amplitude: ±3°C
- Frequency applied: 0.02 Hz
- Sample pan: aluminum crimped pan
- Atmosphere for measurement and predrying: nitrogen, 100 mL/min

(6) Observation of Phase-separation Structure by Transmission Electron Microscope (TEM)

The electrolyte membrane (analyte) was used to verify the phase-separation structure. A sample piece was immersed in an aqueous 2 wt% lead acetate solution as a staining agent, and left to stand at 25°C for 72 hours. The sample stained was taken out, and embedded in an epoxy resin. An 80 nm thin piece was cut out using an ultramicrotome at room temperature, and the thin piece obtained was collected on a Cu grid to be used for TEM observation. The observation was performed at an accelerating voltage of 100 kV, and a photograph was taken at a photographic magnification of 10,000 to 100,000 times. In this regard, the photographic magnification was suitably set in accordance with the size of the phase-separation structure. The device used was HT7700 (manufactured by Hitachi High-Technologies Corporation).

In addition, the TEM image was transformed by fast Fourier transform (FFT). From the ring-like FFT pattern obtained, the spatial frequencies in the TD direction and the ZD direction were measured. From the results of measurement, the period size of the phase-separation structure was calculated. As the spatial frequency, the distance from the center of the image to the center of the thickness of the ring was measured. For the FFT and the distance measurement, a DigitalMicrograph (manufactured by Gatan, Inc.) was used.

(7) Observation of Phase-separation Structure by Transmission Electron Microscopic (TEM) Tomography

A thin piece sample made by the method described in (6) above was mounted on a collodion membrane, and observed under the following conditions.

Device: field emission electron microscope (HRTEM) JEM 2100F manufactured by JEOL Ltd.

Image-capturing: DigitalMicrograph (manufactured by Gatan, Inc.)
System: a marker method
Accelerating voltage: 200 kV
Photographic magnification: 30,000 times
Angle of tilt: +60° to -62°
Reconstruction resolution: 0.71 nm/pixel

The marker method was applied to the three-dimensional reconstruction process. An alignment marker used for performing three-dimensional reconstruction was Au colloidal particles provided on a collodion film. Using the marker as a reference, the sample was tilted in 1° steps in the range of from +61° to -62°, and TEM images were taken. On the basis of a total of 124 TEM images obtained from the continuous tilt image series, a CT reconstruction process was performed, and a three-dimensional phase-separation structure was observed.

(8) Proton Conductivity

A carbon paste (G7711, manufactured by EM Japan Co., Ltd.) based on isopropanol was applied to a platinum electrode of a cell, and onto the carbon paste, a diffusion layer electrode (ELAT GDL 140-HT, manufactured by E-TEK) cut to 18 mm × 6 mm was attached. An electrolyte membrane (analyte) cut to a 30 mm × 8 mm rectangle was disposed between the electrodes of the cell, and the cell was fastened at 1 MPa, and housed in the chamber of MTS740. The proton resistance of the electrolyte membrane in the direction of the thickness of the membrane was evaluated using an MTS740 membrane resistance measurement system (manufactured by Scribner Associates Inc.). In the MTS740, the cell was housed in the chamber with the temperature controlled, and air gas was supplied to the chamber through a humidifier using a mass flow controller. To the cell, a frequency response analyzer PSM1735 (manufactured by Newtons4th Ltd.) was connected, and it was possible that the resistance was determined with the A/C signal swept from 1 MHz to 1 KHz.

MTS740 and PSM1735 were connected to a personal computer, and were controllable with software. The temperature in the chamber was set at 80°C, then air gas at 90% RH was supplied to the chamber, and the cell was held for 1 hour to wet the electrolyte membrane sufficiently. Then, air at 20% RH was supplied to dry the cell, air at 30% RH was supplied, the cell was held for 30 minutes, and the resistance was measured. When this was done, the frequency was swept from 1 MHz to 1 KHz. Then, air at 80% RH was supplied, the cell was held for 30 minutes, and the resistance was measured in the same manner. From the data of the resistance measured, a Cole-Cole plot was prepared. The frequency band at and around 1 MHz is influenced by the inductance component of a cable connecting the cell to PSM1735, and thus, a value on the real axis at 200 kHz, at which the influence is smaller, was regarded as the resistance value (Ω). The proton conductivity determined when air at 30% RH was supplied was regarded as a low-humidity proton conductivity, and the proton conductivity determined when air at 80% RH was supplied was regarded as a high-humidity proton conductivity. The resistance values measured were used to calculate the proton conductivity in accordance with the following equation.

$$\text{Proton conductivity (mS/cm)} = 1 / (\text{resistance value } (\Omega) \times \text{active area } (\text{cm}^2) / \text{thickness of sample (cm)})$$

The low-humidity proton conductivity is preferably 0.85 mS/cm or more, more preferably 0.90 mS/cm or more, still more preferably, 1.00 mS/cm or more, particularly preferably 1.10 mS/cm or more. The high-humidity proton conductivity is preferably 9.00 mS/cm or more, more preferably 9.50 mS/cm or more, still more preferably 11.00 mS/cm or more, particularly preferably 13.00 mS/cm or more.

(9) Rate of Dry-wet Dimensional Change

The electrolyte membrane (analyte) was cut to a 3 mm × 20 mm rectangle, which was used as a sample piece. The sample piece was placed in the sample holder of a thermomechanical analyzer TMA/SS6100 (manufactured by Hitachi High-Tech Science Corporation) having an oven with a temperature and humidity regulating function, in such a manner that the long side of the sample piece was in the direction of measurement. The analyzer was set in such a manner that a stress of 20 mN was applied. In the oven, the sample was made steady at 23°C and at 50% RH for 1 hour, and the length of this sample piece was regarded as the zero point. The temperature in the oven was fixed at 23°C, the humidity was adjusted to 30% RH (a dry condition) over a period of 30 minutes, and the sample piece was held for 20 minutes. Next, the humidity was adjusted to 90% RH (a humidified condition) over a period of 30 minutes. This dry-wet cycle (30% RH-90% RH) was regarded as one cycle, and a difference at the 10th cycle between the rate (%) of dimensional change under the 30% RH and the rate (%) of dimensional change under the 90% RH was regarded as the rate (%) of dry-wet dimensional change. The rate of dry-wet dimensional change is preferably 7.0% or less, more preferably 6.5% or less, still more preferably 6.0% or less, particularly preferably 5.7% or less.

[Synthesis of Polymer]

The structure of each compound obtained in the following Synthesis Examples was verified by $^1$H-NMR. The purity was analyzed quantitatively by capillary electrophoresis (for organic substances) and ion chromatography (for inorganic substances).

<Synthesis Example 1>

(Synthesis of 2,2-bis(4-hydroxyphenyl)-1,3-dioxolane (K-DHBP) represented by the following formula (G1))

In a 500 mL flask equipped with a stirrer, a thermometer, and a distillation tube, 49.5 g of 4,4'-dihydroxybenzophenone, 134 g of ethylene glycol, 96.9 g of trimethyl orthoformate, and 0.50 g of p-toluenesulfonic acid monohydrate were fed to obtain a solution. Then, the solution was stirred for 2 hours at a temperature kept at 78 to 82°C. Further, the internal temperature was gradually raised to 120°C, and kept at 120°C until the distillation of methyl formate, methanol, and trimethyl orthoformate completely stopped. After the reaction liquid was cooled to room temperature, the reaction liquid was diluted with ethyl acetate. The organic layer was washed with 100 mL of an aqueous 5% potassium carbonate solution, the resulting liquid was then separated, and the solvent was distilled away. To the residue, 80 mL of dichloromethane was added to deposit crystals, and the crystals were filtrated and dried to give 52.0 g of 2,2-bis(4-hydroxyphenyl)-1,3-dioxolane. The compound had a purity of 99.9%.

[Chem. 15]

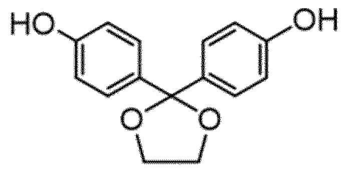

(G1)

<Synthesis Example 2>

(Synthesis of disodium-3,3'-disulfonate-4,4'-difluorobenzophenone represented by the following formula (G2))

In 150 mL of fuming sulfuric acid (50% $SO_3$) (a Wako Pure Chemical reagent), 109.1 g of 4,4'-difluorobenzophenone (an Aldrich reagent) was allowed to react at 100°C for 10 hours. Then, the resulting product was gradually poured into a large amount of water, the resulting mixture was neutralized with NaOH, and then 200 g of sodium chloride (NaCl) was added to the mixture to precipitate a synthesized product. The precipitate obtained was filtrated off and recrystallized from an aqueous ethanol solution to give disodium-3,3'-disulfonate-4,4'-difluorobenzophenone. The compound had a purity of 99.3%.

[Chem. 16]

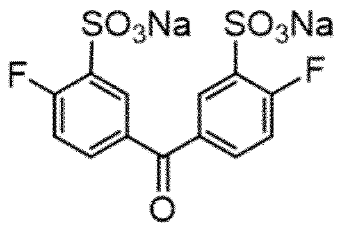

(G2)

<Synthesis Example 3>

(Synthesis of disodium diphenylsulfone-4,4'-difluoro-3,3'-disulfonate represented by the following formula (G3))

In 150 mL of fuming sulfuric acid (50% $SO_3$) (a Wako Pure Chemical reagent), 109.1 g of 4,4-difluorodiphenyl sulfone (an Aldrich reagent) was allowed to react at 100°C for 10 hours. Then, the resulting product was gradually poured into a large amount of water, the resulting mixture was neutralized with NaOH, and then 200 g of sodium chloride was

added to the mixture to precipitate a synthesized product. The precipitate obtained was filtrated off and recrystallized from an aqueous ethanol solution to give disodium diphenylsulfone-4,4'-difluoro-3,3'-disulfonate. The compound had a purity of 99.3%.

[Chem. 17]

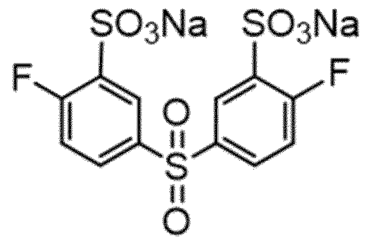

(G3)

[Electrolyte Material (I)]

[Example 1]

<Synthesis of nonionic oligomer a1 represented by the following general formula (G4)>

Into a 2,000 mL SUS polymerizer equipped with a stirrer, a nitrogen introduction tube, and a Dean-Stark trap, 16.59 g of potassium carbonate (an Aldrich reagent, 120 mmol), 25.83 g (100 mmol) of K-DHBP obtained in Synthesis Example 1, and 21.38 g of 4,4'-difluorobenzophenone (an Aldrich reagent, 98 mmol) were introduced. After the device was purged with nitrogen, 300 mL of *N*-methylpyrrolidone (NMP) and 100 mL of toluene were added, the resulting mixture was dehydrated at 150°C, the temperature was raised to remove toluene, and the mixture was polymerized at 170°C for 3 hours. The resulting product was purified by reprecipitation in a large amount of methanol to obtain a nonionic oligomer a1 having a hydroxy end group. The number-average molecular weight of this nonionic oligomer a1 having a hydroxy end group was 20,000.

Into a 500 mL three-necked flask equipped with a stirrer, a nitrogen introduction tube, and a Dean-Stark trap, 1.1 g of potassium carbonate (an Aldrich reagent, 8 mmol) and 20.0 g (1 mmol) of the nonionic oligomer a1 having a hydroxy end group were introduced. After the device was purged with nitrogen, 100 mL of NMP and 30 mL of toluene were added, the resulting mixture was dehydrated at 100°C, and the temperature was raised to remove toluene. Furthermore, 1.1 g of hexafluorobenzene (an Aldrich reagent, 6 mmol) was introduced, and the resulting mixture was allowed to react at 105°C for 12 hours. The resulting product was purified by reprecipitation in a large amount of isopropyl alcohol to obtain a nonionic oligomer a1 (having a fluoro end group) represented by the following general formula (G4). The number-average molecular weight of this nonionic oligomer a1 was 21,000. In this regard, m represents an integer of 1 or greater in the general formula (G4).

[Chem. 18]

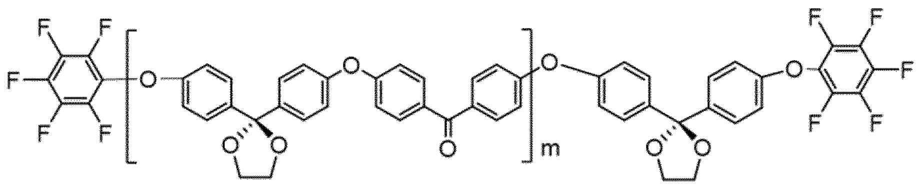

(G4)

<Synthesis of ionic oligomer a2 represented by the following general formula (G5)>

Into a 2,000 mL SUS polymerizer equipped with a stirrer, a nitrogen introduction tube, and a Dean-Stark trap, 27.64 g of potassium carbonate (an Aldrich reagent, 200 mmol), 12.91 g (50 mmol) of K-DHBP obtained in Synthesis Example 1, 9.31 g of 4,4'-biphenol (an Aldrich reagent, 50 mmol), 41.60 g (98.5 mmol) of disodium-3,3'-disulfonate-4,4'-difluorobenzophenone obtained in Synthesis Example 2, and 26.40 g of 18-crown-6 (Wako Pure Chemical Industries, Ltd., 100 mmol) were introduced. After the device was purged with nitrogen, 300 mL of NMP and 100 mL of toluene

were added, the resulting mixture was dehydrated at 150°C, the temperature was raised to remove toluene, and the mixture was polymerized at 170°C for 6 hours. The resulting product was purified by reprecipitation in a large amount of isopropyl alcohol to obtain an ionic oligomer a2 (having an OM end group) represented by the following general formula (G5). The number-average molecular weight of this ionic oligomer a2 was 45,000. In this regard, in the general formula (G5), M represents a hydrogen atom, Na, or K, and n represents an integer of 1 or greater.

[Chem. 19]

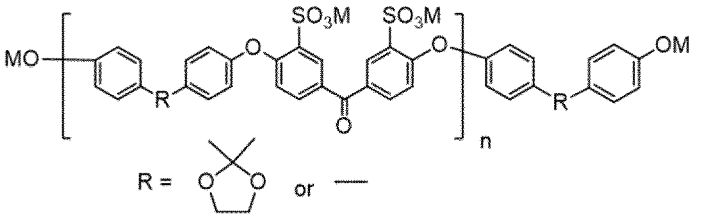

(G5)

<Synthesis of ionic oligomer a2' represented by the following general formula (G6)>

Into a 2,000 mL SUS polymerizer equipped with a stirrer, a nitrogen introduction tube, and a Dean-Stark trap, 0.56 g of potassium carbonate (an Aldrich reagent, 400 mmol) and 49.0 g of the ionic oligomer a2 were introduced. After the device was purged with nitrogen, 500 mL of NMP was added, the contents were dissolved at 60°C, and then, 19.8 g of a hexafluorobenzene/NMP solution (1 wt%) was added. The resulting mixture was allowed to react at 80°C for 18 hours to obtain an NMP solution containing an ionic oligomer a2' (having an OM end group) represented by the general formula (G6). The number-average molecular weight of this ionic oligomer a2' was 90,000. In this regard, in the general formula (G6), M represents a hydrogen atom, Na, or K, and n represents an integer of 1 or greater.

[Chem. 20]

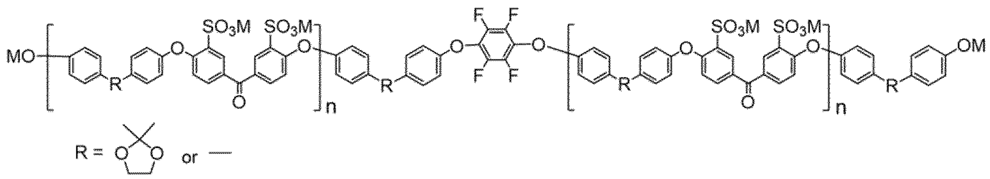

(G6)

<Synthesis of block copolymer b1>

The block copolymer b1 contains the oligomer a2' as the ionic segment and the oligomer a1 as the nonionic segment.

In a 2,000 mL SUS polymerizer equipped with a stirrer, a nitrogen introduction tube, and a Dean-Stark trap, 49.0 g of the ionic oligomer a2' and 7.65 g of the nonionic oligomer a1 were introduced, NMP was added in such a manner that the total amount of the oligomers fed was 7 wt%, and the resulting mixture was allowed to react at 105°C for 24 hours. The resulting product was reprecipitated in a large amount of an isopropyl alcohol/NMP solution mixture (at a ratio of 2/1 by weight), and purified in a large amount of isopropyl alcohol to obtain a block copolymer b1. This block copolymer b1 had a number-average molecular weight of 170,000 and a weight-average molecular weight of 410,000.

The block copolymer b1 had a saturated crystallinity of 11.6%, a glass transition temperature of 157°C, and an IEC of 2.5 meq/g. In an electrolyte membrane produced using the block copolymer b1, a co-continuous phase-separation structure (in which each of the hydrophilic domain containing an ionic group and the hydrophobic domain containing no ionic group formed a continuous phase) was verified.

[Example 2]

<Synthesis of block copolymer b2>

The block copolymer b2 contains the oligomer a2' as the ionic segment and the oligomer a1 as the nonionic segment.

A block copolymer b2 was obtained in the same manner as in Example 1 except that the amount of the nonionic oligomer a1 used was 5.4 g. This block copolymer b2 had a number-average molecular weight of 180,000 and a weight-average molecular weight of 430,000.

The block copolymer b2 had a saturated crystallinity of 9.2%, a glass transition temperature of 160°C, and an IEC of 2.7 meq/g. In an electrolyte membrane produced using the block copolymer b2, a co-continuous phase-separation structure (in which each of the hydrophilic domain containing an ionic group and the hydrophobic domain containing no ionic group formed a continuous phase) was verified.

[Example 3]

(Synthesis of nonionic oligomer a3 represented by the above-described general formula (G4))

An oligomer a3 having a hydroxy end was obtained in the same manner as the oligomer a1 having a hydroxy end was synthesized except that the amount of 4,4'-difluorobenzophenone used was 21.45 g. The number-average molecular weight of this oligomer a3 having a hydroxy end was 25,000.

A nonionic oligomer a3 (having a fluoro end group) represented by the general formula (G4) was obtained in the same manner as the oligomer a1 was synthesized except that 25.0 g of the oligomer a3 having a hydroxy end was used in place of the oligomer a1 having a hydroxy end. The number-average molecular weight of this nonionic oligomer a3 was 26,000.

<Synthesis of block copolymer b3>

The block copolymer b3 contains the oligomer a2' as the ionic segment and the oligomer a3 as the nonionic segment.

A block copolymer b3 was obtained in the same manner as the block copolymer b1 was synthesized except that the nonionic oligomer a3 (12.3 g) was used in place of the nonionic oligomer a1 (7.65 g). This block copolymer b3 had a number-average molecular weight of 160,000 and a weight-average molecular weight of 390,000.

The block copolymer b3 had a saturated crystallinity of 15.6%, a glass transition temperature of 160°C, and an IEC of 2.1 meq/g. In an electrolyte membrane produced using the block copolymer b3, a co-continuous phase-separation structure (in which each of the hydrophilic domain containing an ionic group and the hydrophobic domain containing no ionic group formed a continuous phase) was verified.

[Example 4]

<Synthesis of nonionic oligomer a5 represented by the above-described general formula (G4)>

An oligomer a5 having a hydroxy end was obtained in the same manner as the oligomer a1 having a hydroxy end was synthesized except that the amount of 4,4'-difluorobenzophenone used was 21.51 g. The number-average molecular weight of this oligomer a5 having a hydroxy end was 29,000.

A nonionic oligomer a5 (having a fluoro end group) represented by the general formula (G4) was obtained in the same manner as the oligomer a1 was synthesized except that 29.0 g of the oligomer a5 having a hydroxy end was used in place of the oligomer a1 having a hydroxy end group. The number-average molecular weight of this nonionic oligomer a5 was 30,000.

<Synthesis of ionic oligomer a4 represented by the above-described general formula (G5)>

An ionic oligomer a4 was obtained in the same manner as the ionic oligomer a2 was synthesized except that the amount of disodium-3,3'-disulfonate-4,4'-difluorobenzophenone used was 41.38 g (98.0 mmol). The number-average molecular weight of this ionic oligomer a4 was 35,000.

<Synthesis of ionic oligomer a4' represented by the following general formula (G7)>

Into a 2,000 mL SUS polymerizer equipped with a stirrer, a nitrogen introduction tube, and a Dean-Stark trap, 0.56 g of potassium carbonate (an Aldrich reagent, 400 mmol) and 37.16 g of the ionic oligomer a4 were introduced. After the device was purged with nitrogen, 400 mL of NMP was added, the contents were dissolved at 60°C, and then, 11.4 g of a 2,6-difluorobenzonitrile/NMP solution (1 wt%) was added. The resulting mixture was allowed to react at 80°C for 18 hours to obtain an NMP solution containing an ionic oligomer a4' (having an OM end group) represented by the general formula (G7). The number-average molecular weight of this ionic oligomer a4' was 70,000. In this regard, in the

general formula (G7), M represents a hydrogen atom, Na, or K, and n represents an integer of 1 or greater.

[Chem. 21]

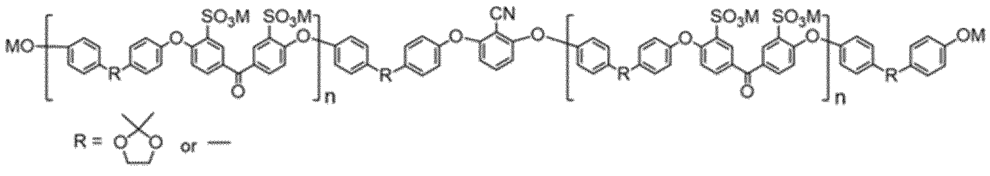

(G7)

<Synthesis of block copolymer b4>

The block copolymer b4 contains the oligomer a4’ as the ionic segment and the oligomer a5 as the nonionic segment.

A block copolymer b4 was obtained in the same manner as the block copolymer b1 was synthesized except that the ionic oligomer a4’ (37.16 g) was used in place of the ionic oligomer a2’ (49.0 g), and that the nonionic oligomer a5 (12.39 g) was used in place of the nonionic oligomer a1 (7.65 g). This block copolymer b4 had a number-average molecular weight of 120,000 and a weight-average molecular weight of 360,000.

The block copolymer b4 had a saturated crystallinity of 18.0%, a glass transition temperature of 160°C, and an IEC of 1.9 meq/g. In an electrolyte membrane produced using the block copolymer b4, a co-continuous phase-separation structure (in which each of the hydrophilic domain containing an ionic group and the hydrophobic domain containing no ionic group formed a continuous phase) was verified.

[Example 5]

<Synthesis of nonionic oligomer a7 represented by the above-described general formula (G4)>

A nonionic oligomer a7 having a hydroxy end was obtained in the same manner as the nonionic oligomer a1 having a hydroxy end was synthesized except that the amount of 4,4’-difluorobenzophenone used was 21.27 g. The number-average molecular weight of this nonionic oligomer a7 having a hydroxy end was 16,000.

A nonionic oligomer a7 (having a fluoro end group) represented by the general formula (G4) was obtained in the same manner as the nonionic oligomer a1 was synthesized except that the nonionic oligomer a7 having a hydroxy end (16.0 g) was used in place of the nonionic oligomer a1 having a hydroxy end (20.0 g). The number-average molecular weight of this nonionic oligomer a7 was 17,000.

<Synthesis of ionic oligomer a6 represented by the above-described general formula (G5)>

Into a 2,000 mL SUS polymerizer equipped with a stirrer, a nitrogen introduction tube, and a Dean-Stark trap, 27.64 g of potassium carbonate (an Aldrich reagent, 200 mmol), 12.91 g (50 mmol) of K-DHBP obtained in Synthesis Example 1, 9.31 g of 4,4’-biphenol (an Aldrich reagent, 50 mmol), and 41.85 g (99.1 mmol) of disodium-3,3’-disulfonate-4,4’-difluorobenzophenone obtained in Synthesis Example 2 were introduced. After the device was purged with nitrogen, 300 mL of dimethyl sulfoxide (DMSO) and 100 mL of toluene were added, the resulting mixture was dehydrated at 133°C, and the temperature was raised to remove toluene. The mixture was polymerized at 150°C for 2 hours, heated to 155°C, and further polymerized for 1 hour. The resulting product was purified by reprecipitation in a large amount of isopropyl alcohol to obtain an ionic oligomer a6 (having an OM end group) represented by the general formula (G5). The number-average molecular weight of this ionic oligomer a6 was 56,000.

<Synthesis of block copolymer b5>

The block copolymer b5 contains the oligomer a6 as the ionic segment and the oligomer a7 as the nonionic segment.

A block copolymer b5 was obtained in the same manner as the block copolymer b1 was synthesized except that the ionic oligomer a6 (32.79 g) was used in place of the ionic oligomer a2’ (49.0 g), and that the nonionic oligomer a7 (8.19 g) was used in place of the nonionic oligomer a1 (7.65 g). This block copolymer b5 had a number-average molecular weight of 140,000 and a weight-average molecular weight of 360,000.

The block copolymer b5 had a saturated crystallinity of 13.5%, a glass transition temperature of 159°C, and an IEC of 2.1 meq/g. In an electrolyte membrane produced using the block copolymer b5, a co-continuous phase-separation structure (in which each of the hydrophilic domain containing an ionic group and the hydrophobic domain containing no ionic group formed a continuous phase) was verified.

[Comparative Example 1]

<Synthesis of nonionic oligomer a9 represented by the above-described general formula (G4)>

A nonionic oligomer a9 having a hydroxy end was obtained in the same manner as the nonionic oligomer a1 having a hydroxy end was synthesized except that the amount of 4,4'-difluorobenzophenone used was 20.4 g. The number-average molecular weight of this nonionic oligomer a9 having a hydroxy end was 7,000.

A nonionic oligomer a9 (having a fluoro end group) represented by the general formula (G4) was obtained in the same manner as the nonionic oligomer a1 was synthesized except that the nonionic oligomer a9 having a hydroxy end (9.0 g: 1 mmol) was used in place of the nonionic oligomer a1 having a hydroxy end (20.0 g). The number-average molecular weight of this nonionic oligomer a9 was 8,000.

<Synthesis of ionic oligomer a8 represented by the above-described general formula (G5)>

Into a 2,000 mL SUS polymerizer equipped with a stirrer, a nitrogen introduction tube, and a Dean-Stark trap, 27.64 g of potassium carbonate (an Aldrich reagent, 200 mmol), 12.91 g (50 mmol) of K-DHBP obtained in Synthesis Example 1, 9.31 g of 4,4'-biphenol (an Aldrich reagent, 50 mmol), 41.47 g (98.2 mmol) of disodium-3,3'-disulfonate-4,4'-difluorobenzophenone obtained in Synthesis Example 2, and 26.40 g of 18-crown-6 (Wako Pure Chemical Industries, Ltd., 100 mmol) were introduced. After the device was purged with nitrogen, 300 mL of NMP and 100 mL of toluene were added, the resulting mixture was dehydrated at 150°C, the temperature was raised to remove toluene, and the mixture was polymerized at 170°C for 6 hours. The resulting product was purified by reprecipitation in a large amount of isopropyl alcohol to obtain an ionic oligomer a8 (having a hydroxy end group) represented by the general formula (G5). The number-average molecular weight of this ionic oligomer a8 was 42,000.

<Synthesis of block copolymer b6>

The block copolymer b6 contains the oligomer a8 as the ionic segment and the oligomer a9 as the nonionic segment.

A block copolymer b6 was obtained in the same manner as the block copolymer b1 was synthesized except that the ionic-group oligomer a8 (43.57 g) was used in place of the ionic oligomer a2' (49.0 g), and that the nonionic oligomer a9 (10.89 g) was used in place of the nonionic oligomer a1 (7.65 g). This block copolymer b6 had a number-average molecular weight of 140,000 and a weight-average molecular weight of 400,000.

The block copolymer b6 had a saturated crystallinity of 4.1%, a glass transition temperature of 157°C, and an IEC of 2.2 meq/g. In an electrolyte membrane produced using the block copolymer b6, a co-continuous phase-separation structure (in which each of the hydrophilic domain containing an ionic group and the hydrophobic domain containing no ionic group formed a continuous phase) was verified.

[Comparative Example 2]

(Synthesis of nonionic oligomer a11 represented by the above-described general formula (G4))

A nonionic oligomer a11 having a hydroxy end was obtained in the same manner as the nonionic oligomer a1 having a hydroxy end was synthesized except that the amount of 4,4'-difluorobenzophenone used was 20.18 g. The number-average molecular weight of this nonionic oligomer a11 having a hydroxy end was 5,000.

Into a 500 mL three-necked flask equipped with a stirrer, a nitrogen introduction tube, and a Dean-Stark trap, 2.2 g of potassium carbonate (an Aldrich reagent, 16 mmol) and 10.0 g of the nonionic oligomer a11 having a hydroxy end were introduced. After the device was purged with nitrogen, 100 mL of NMP and 30 mL of toluene were introduced, the resulting mixture was dehydrated at 100°C, the temperature was raised to remove toluene, 2.2 g of hexafluorobenzene (an Aldrich reagent, 12 mmol) was added, and the resulting mixture was allowed to react at 105°C for 12 hours. The resulting product was purified by reprecipitation in a large amount of isopropyl alcohol to obtain a nonionic oligomer a11 (having a fluoro end group) represented by the general formula (G4). The number-average molecular weight of this nonionic oligomer a11 was 6,000.

<Synthesis of block copolymer b7>

The block copolymer b7 contains the oligomer a8 as the ionic segment and the oligomer a11 as the nonionic segment.

A block copolymer b7 was obtained in the same manner as the block copolymer b6 was synthesized except that the nonionic oligomer a11 (6.81 g) was used in place of the nonionic oligomer a9 (10.89 g). This block copolymer b7 had a number-average molecular weight of 130,000 and a weight-average molecular weight of 400,000.

The block copolymer b7 had a saturated crystallinity of 0.8%, a glass transition temperature of 157°C, and an IEC of 2.4 meq/g. In an electrolyte membrane produced using the block copolymer b7, a co-continuous phase-separation structure (in which each of the hydrophilic domain containing an ionic group and the hydrophobic domain containing no ionic group formed a continuous phase) was verified, but a non-continuous structure was partially found.

[Comparative Example 3]

<Synthesis of nonionic oligomer a13 represented by the following general formula (G8)>

A nonionic oligomer a13 having a hydroxy end group was obtained in the same manner as the nonionic oligomer a1 having a hydroxy end group was synthesized except that 23.65 g of 4,4-difluorodiphenyl sulfone was used in place of 4,4'-difluorobenzophenone. The number-average molecular weight of this nonionic oligomer a13 having a hydroxy end group was 10,000.

A nonionic oligomer a13 (having a fluoro end group) represented by the general formula (G8) was obtained in the same manner as the nonionic oligomer a1 was synthesized except that 10.0 g of the nonionic oligomer a13 having a hydroxy end group was used in place of 20.0 g of the nonionic oligomer a1 having a hydroxy end group. The number-average molecular weight of this nonionic oligomer a13 was 11,000. In this regard, m represents an integer of 1 or greater in general formula (G8).

[Chem. 22]

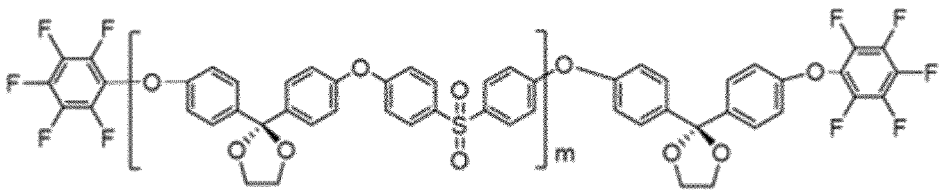

(G8)

<Synthesis of ionic oligomer a12 represented by the following general formula (G9)>

An ionic oligomer a12 (having an OM end group) represented by the general formula (G9) was obtained in the same manner as the ionic oligomer a2 was synthesized except that 44.94 g (98.1 mmol) of disodium diphenylsulfone-4,4'-difluoro-3,3'-disulfonate obtained in Synthesis Example 3 was used in place of 41.60 g of disodium-3,3'-disulfonate-4,4'-difluorobenzophenone. The number-average molecular weight of this ionic oligomer a12 was 41,000. In this regard, in the general formula (G9), M represents a hydrogen atom, Na, or K, and n represents an integer of 1 or greater.

[Chem. 23]

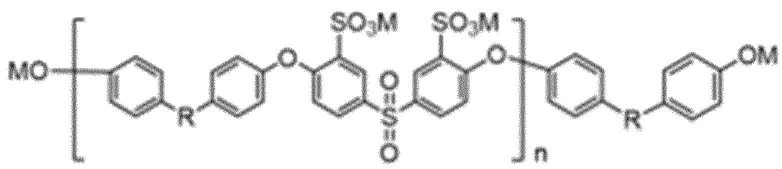

(G9)

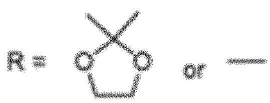

R = or

<Synthesis of block copolymer b8>

The block copolymer b8 contains the oligomer a12 as the ionic segment and the oligomer a13 as the nonionic segment.

In a 2,000 mL SUS polymerizer equipped with a stirrer, a nitrogen introduction tube, and a Dean-Stark trap, the ionic oligomer a12 (45.76 g) and the nonionic oligomer a13 (8.93 g) were introduced, NMP was added in such a manner that the total amount of the oligomers fed was 7 wt%, and the resulting mixture was allowed to react at 105°C for 24 hours. The resulting product was reprecipitated in a large amount of an isopropyl alcohol/NMP solution mixture (at a ratio of 2/1 by weight), and purified in a large amount of isopropyl alcohol to obtain a block copolymer b8. This block copolymer b8 had a number-average molecular weight of 120,000 and a weight-average molecular weight of 290,000.

The block copolymer b8 had a saturated crystallinity of 0.0%, a glass transition temperature of 231°C, and an IEC of 2.4 meq/g. In an electrolyte membrane produced using the block copolymer b8, a co-continuous phase-separation structure (in which each of the hydrophilic domain containing an ionic group and the hydrophobic domain containing no ionic group formed a continuous phase) was verified.

[Results of Measurement]

The results of measurement of the electrolyte material obtained in each of the above-described Examples 1 to 5 and Comparative Examples 1 to 3 and the results of evaluation of the proton conductivity and the rate of dry-wet dimensional change are shown in Table 1.

[Table 1]

| | Electrolyte Material (I) | | | | | Physical Properties | | | | | Evaluation | | |
|---|---|---|---|---|---|---|---|---|---|---|---|---|---|
| | Type | Ionic Segment Mn1 | Nonionic Segment Mn2 | Block Copolymer Mn3 | Mn1/Mn2 | Saturated Crystallinity (%) | Tg (°C) | Phase-Separation Structure | Phase-Separation Period Size (nm) | IEC (meq/g) | Rate of Dry-Wet Dimensional Change (%) | High-Humidity Proton Conductivity (mS/cm) | Low-Humidity Proton Conductivity (mS/cm) |
| Example 1 | Block Copolymer b1 | 90,000 | 21,000 | 170,000 | 4.29 | 11.6 | 157 | Co-continuous | 62 | 2.5 | 5.4 | 17.06 | 1.46 |
| Example 2 | Block Copolymer b2 | 90,000 | 21,000 | 180,000 | 4.29 | 9.2 | 160 | Co-continuous | 69 | 2.7 | 6.3 | 19.16 | 1.71 |
| Example 3 | Block Copolymer b3 | 90,000 | 26,000 | 160,000 | 3.46 | 15.6 | 160 | Co-continuous | 58 | 2.1 | 3.9 | 14.11 | 1.17 |
| Example 4 | Block Copolymer b4 | 70,000 | 30,000 | 120,000 | 2.33 | 18.0 | 160 | Co-continuous | 47 | 1.9 | 3.1 | 9.05 | 0.88 |
| Example 5 | Block Copolymer b5 | 56,000 | 17,000 | 140,000 | 3.29 | 13.5 | 159 | Co-continuous | 46 | 2.1 | 4.4 | 9.82 | 0.90 |
| Comparative Example 1 | Block Copolymer b6 | 42,000 | 8,000 | 140,000 | 5.25 | 4.1 | 157 | Co-continuous | 30 | 2.2 | 4.9 | 6.32 | 0.75 |
| Comparative Example 2 | Block Copolymer b7 | 42,000 | 6,000 | 130,000 | 7.00 | 0.8 | 157 | Co-continuous | 35 | 2.4 | 6.0 | 8.22 | 0.81 |
| Comparative Example 3 | Block Copolymer b8 | 41,000 | 11,000 | 120,000 | 3.73 | 0.0 | 231 | Co-continuous | 32 | 2.4 | 7.1 | 6.65 | 0.70 |

In Examples 1 to 5, the electrolyte material (I) having a saturated crystallinity of 5% or more and 30% or less was used, and accordingly, the rate of dry-wet dimensional change was small, and the proton conductivity at low humidity and high humidity was high. That is, both the mechanical durability and the proton conductivity were achieved at a comparatively high level.

On the other hand, in all of Comparative Examples 1 to 3, the saturated crystallinity was lower than 5%. As a result, the rate of dry-wet dimensional change or the proton conductivity was poor. That is, the mechanical durability and the proton conductivity were not achieved simultaneously.

[Examples 11 to 15]

The electrolyte membrane (analyte) produced with the electrolyte material in each of the above-described Examples 1 to 5, and having a "crystallinity of 0%" was hot-pressed as in "(4) Measurement of Saturated Crystallinity" above. The resulting analyte under the conditions where the crystallinity was no longer changed was used as a sample, and the rate of dry-wet dimensional change and the proton conductivity were measured. The results are shown in Table 2.

[Table 2]

| | Electrolyte Material (I) | Evaluation | | |
|---|---|---|---|---|
| | | Rate of Dry-Wet Dimensional Change (%) | High-Humidity Proton Conductivity (mS/cm) | Low-Humidity Proton Conductivity (mS/cm) |
| Example 11 | Example 1 | 4.4 | 21.64 | 2.05 |
| Example 12 | Example 2 | 5.9 | 24.43 | 2.41 |
| Example 13 | Example 3 | 2.5 | 18.73 | 1.62 |
| Example 14 | Example 4 | 1.8 | 10.69 | 1.16 |
| Example 15 | Example 5 | 2.7 | 12.03 | 1.23 |

As shown by Examples 1 to 5 in Table 1, the electrolyte membrane (analyte) produced with the electrolyte material (I) according to the present invention had both mechanical durability (the rate of dry-wet dimensional change) and proton conductivity at a comparatively high level, even if the crystallization had not progressed (even if the crystallinity was 0%), and promoting crystallization further enhanced the mechanical durability (rate of dry-wet dimensional change) and the proton conductivity, as shown in Table 2.

[Electrolyte Material (II)]

[Example 21]

<Block copolymer b21>

The above-described block copolymer b1 was used as the block copolymer b21. The block copolymer b21 exhibited a crystallization peak in DSC, and the heat of crystallization was 15.8 J/g. Accordingly, the product of the IEC and the heat of crystallization was 39.5.

[Example 22]

<Block copolymer b22>

The above-described block copolymer b2 was used as the block copolymer b22. The block copolymer b22 exhibited a crystallization peak in DSC, and the heat of crystallization was 13.2 J/g. Accordingly, the product of the IEC and the heat of crystallization was 35.6.

[Example 23]

<Synthesis of ionic oligomer a24 represented by the above-described general formula (G5)>

An ionic oligomer a24 was obtained in the same manner as the ionic oligomer a2 was synthesized except that the amount of disodium-3,3'-disulfonate-4,4'-difluorobenzophenone used was 41.38 g (98.0 mmol). The number-average molecular weight of this ionic oligomer a24 was 35,000.

<Synthesis of ionic oligomer a24' represented by the above-described general formula (G6)>

An NMP solution containing the ionic oligomer a24' (having an OM end group) represented by the general formula (G6) was obtained in the same manner as the ionic oligomer a2' was synthesized except that the ionic oligomer a24 (37.16 g) was used in place of the ionic oligomer a2 (49.0 g), that the amount of NMP used was 400 mL, and that the amount of the hexafluorobenzene/NMP solution (1 wt%) used was 15.3 g. The number-average molecular weight of the oligomer a24' was 70,000.

<Synthesis of block copolymer b23>

The block copolymer b23 contains the oligomer a24' as the ionic segment and the oligomer a1 as the nonionic segment.

A block copolymer b23 was obtained in the same manner as the block copolymer b1 was synthesized except that, in a 2,000 mL SUS polymerizer equipped with a stirrer, a nitrogen introduction tube, and a Dean-Stark trap, the ionic oligomer a24' (37.16 g) was used in place of the ionic oligomer a2' (49.0 g), and that the amount of the nonionic oligomer a1 used was 5.80 g. This block copolymer b23 had a number-average molecular weight of 190,000 and a weight-average molecular weight of 440,000.

The IEC of the block copolymer b23 was 2.4 meq/g. In an electrolyte membrane produced using the block copolymer b23, a co-continuous phase-separation structure (in which each of the hydrophilic domain containing an ionic group and the hydrophobic domain containing no ionic group formed a continuous phase) was verified. In addition, a crystallization peak was exhibited in DSC, and the heat of crystallization was 16.6 J/g. Accordingly, the product of the IEC and the heat of crystallization was 39.8.

[Example 24]

<Synthesis of nonionic oligomer a21 represented by the following general formula (G10)>

Into a 500 mL three-necked flask equipped with a stirrer, a nitrogen introduction tube, and a Dean-Stark trap, 1.1 g of potassium carbonate (an Aldrich reagent, 8 mmol) and 20.0 g (1 mmol) of the nonionic oligomer a1 having a hydroxy end were introduced. After the device was purged with nitrogen, 100 mL of NMP and 30 mL of toluene were added, the resulting mixture was dehydrated at 100°C, and the temperature was raised to remove toluene. Then, 0.84 g of 2,6-difluorobenzonitrile (an Aldrich reagent, 6 mmol) was introduced, and allowed to react at 105°C for 12 hours. The resulting product was purified by reprecipitation in a large amount of isopropyl alcohol to obtain a nonionic oligomer a21 (having a fluoro end group) represented by the following general formula (G10). The number-average molecular weight of this nonionic oligomer a21 was 21,000. In this regard, m represents an integer of 1 or greater in the general formula (G10).

[Chem. 24]

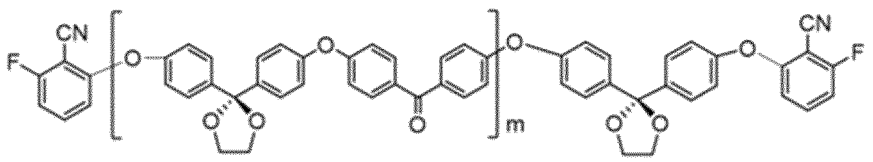
(G10)

<Synthesis of ionic oligomer a24" represented by the following general formula (G11)>

Into a 2,000 mL SUS polymerizer equipped with a stirrer, a nitrogen introduction tube, and a Dean-Stark trap, 0.56 g of potassium carbonate (an Aldrich reagent, 400 mmol) and 37.16 g of the ionic oligomer a24 were introduced.

After the device was purged with nitrogen, 400 mL of NMP was added, the contents were dissolved at 60°C, and then, 11.4 g of a 2,6-difluorobenzonitrile/NMP solution (1 wt%) was added. The resulting mixture was allowed to react at 80°C for 18 hours to obtain an NMP solution containing an ionic oligomer a24" (having an OM end group) represented by the general formula (G11). The number-average molecular weight of this ionic oligomer a24" was 70,000. In this regard, in the general formula (G11), M represents a hydrogen atom, Na, or K, and n represents an integer of 1 or greater.

[Chem. 25]

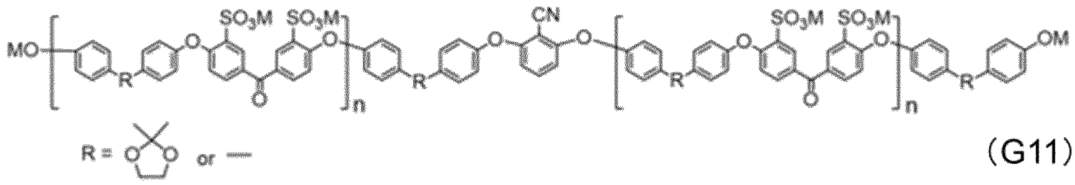

(G11)

<Synthesis of block copolymer b24>

The block copolymer b24 contains the oligomer a24" as the ionic segment and the oligomer a21 as the nonionic segment.

A block copolymer b24 was obtained in the same manner as the block copolymer b1 was synthesized except that the ionic oligomer a24" (37.16 g) was used in place of the ionic oligomer a2' (49.0 g), and that the amount of the nonionic oligomer a21 used was 5.80 g. This block copolymer b24 had a number-average molecular weight of 100,000 and a weight-average molecular weight of 260,000.

The IEC of the block copolymer b24 was 2.2 meq/g. In an electrolyte membrane produced using the block copolymer b24, a co-continuous phase-separation structure (in which each of the hydrophilic domain containing an ionic group and the hydrophobic domain containing no ionic group formed a continuous phase) was verified. In addition, a crystallization peak was exhibited in DSC, and the heat of crystallization was 20.1 J/g. Accordingly, the product of the IEC and the heat of crystallization was 44.2.

[Example 25]

<Synthesis of block copolymer b25>

The block copolymer b25 contains the oligomer a24" as the ionic segment and the oligomer a1 as the nonionic segment.

A block copolymer b25 was obtained in the same manner as the block copolymer b24 was synthesized except that the nonionic oligomer a1 (9.29 g) was used in place of the nonionic oligomer a21 (5.80 g). This block copolymer b25 had a number-average molecular weight of 150,000 and a weight-average molecular weight of 380,000.

The IEC of the block copolymer b25 was 2.1 meq/g. In an electrolyte membrane produced using the block copolymer b25, a co-continuous phase-separation structure (in which each of the hydrophilic domain containing an ionic group and the hydrophobic domain containing no ionic group formed a continuous phase) was verified. In addition, a crystallization peak was exhibited in DSC, and the heat of crystallization was 22.0 J/g. Accordingly, the product of the IEC and the heat of crystallization was 46.2.

[Example 26]

<Block copolymer b26>

The above-described block copolymer b5 was used as the block copolymer b26. The block copolymer b26 exhibited a crystallization peak in DSC, and the heat of crystallization was 21.1 J/g. Accordingly, the product of the IEC and the heat of crystallization was 44.3.

[Example 27]

<Synthesis of block copolymer b27>

The block copolymer b27 contains the oligomer a2' as the ionic segment and the oligomer a1 as the nonionic segment.

A block copolymer b27 was obtained in the same manner as in Example 1 except that the amount of the nonionic oligomer a1 used was 4.1 g. This block copolymer b27 had a number-average molecular weight of 160,000 and a weight-average molecular weight of 410,000.

The IEC of the block copolymer b27 was 2.9 meq/g. In an electrolyte membrane produced using the block copolymer b27, a co-continuous phase-separation structure (in which each of the hydrophilic domain containing an ionic group and the hydrophobic domain containing no ionic group formed a continuous phase) was verified. In addition, a crystallization peak was exhibited in DSC, and the heat of crystallization was 12.1 J/g. Accordingly, the product of the IEC and the heat of crystallization was 35.1.

[Comparative Example 21]

<Synthesis of nonionic oligomer a31 represented by the following general formula (G12)>

Into a 2,000 mL SUS polymerizer equipped with a stirrer, a nitrogen introduction tube, and a Dean-Stark trap, 16.59 g of potassium carbonate (an Aldrich reagent, 120 mmol), 25.8 g (100 mmol) of K-DHBP obtained in Synthesis Example 1, and 20.3 g of 4,4'-difluorobenzophenone (an Aldrich reagent, 93 mmol) were introduced. After the device was purged with nitrogen, 300 mL of NMP and 100 mL of toluene were added, the resulting mixture was dehydrated at 160°C, the temperature was raised to remove toluene, and the mixture was polymerized at 180°C for 1 hour. The resulting product was purified by reprecipitation in a large amount of methanol to obtain a nonionic oligomer a31 having a hydroxy end group. The number-average molecular weight of this nonionic oligomer a31 having a hydroxy end group was 10,000.

Into a 500 mL three-necked flask equipped with a stirrer, a nitrogen introduction tube, and a Dean-Stark trap, 1.1 g of potassium carbonate (an Aldrich reagent, 8 mmol) and 20.0 g (2 mmol) of the nonionic oligomer a31 having a hydroxy end were introduced. After the device was purged with nitrogen, 100 mL of NMP and 30 mL of cyclohexane were added, the resulting mixture was dehydrated at 100°C, the temperature was raised to remove cyclohexane, 4.0 g of decafluorobiphenyl (an Aldrich reagent, 12 mmol) was introduced, and the resulting mixture was allowed to react at 105°C for 1 hour. The resulting product was purified by reprecipitation in a large amount of isopropyl alcohol to obtain a nonionic oligomer a31 (having a fluoro end group) represented by the following general formula (G12). The number-average molecular weight of this nonionic oligomer a31 was 11,000. In this regard, m represents an integer of 1 or greater in the general formula (G12).

[Chem. 26]

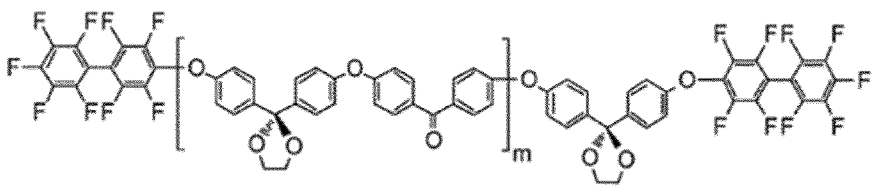

(G12)

<Synthesis of ionic oligomer a32 represented by the above-described general formula (G5)>

Into a 2,000 mL SUS polymerizer equipped with a stirrer, a nitrogen introduction tube, and a Dean-Stark trap, 27.6 g of potassium carbonate (an Aldrich reagent, 200 mmol), 12.9 g (50 mmol) of K-DHBP obtained in Synthesis

Example 1, 9.3 g of 4,4'-biphenol (an Aldrich reagent, 50 mmol), 39.3 g (93 mmol) of disodium-3,3'-disulfonate-4,4'-difluorobenzophenone obtained in Synthesis Example 2, and 17.9 g of 18-crown-6 ether (Wako Pure Chemical Industries, Ltd., 82 mmol) were introduced. After the device was purged with nitrogen, 300 mL of NMP and 100 mL of toluene were added, the resulting mixture was dehydrated at 170°C, the temperature was raised to remove toluene, and the mixture was polymerized at 180°C for 1 hour. The resulting product was purified by reprecipitation in a large amount of isopropyl alcohol to obtain an ionic oligomer a22 (having an OM end group) represented by the general formula (G5). The number-average molecular weight of this ionic oligomer a32 was 16,000.

<Synthesis of block copolymer b31>

The block copolymer b31 contains the oligomer a32 as the ionic segment and the oligomer a31 as the nonionic segment.

Into a 500 mL three-necked flask equipped with a stirrer, a nitrogen introduction tube, and a Dean-Stark trap, 0.56 g of potassium carbonate (an Aldrich reagent, 4 mmol) and 16 g (1 mmol) of the ionic oligomer a32 were introduced. After the device was purged with nitrogen, 100 mL of NMP and 30 mL of cyclohexane were introduced, the resulting mixture was dehydrated at 100°C, the temperature was raised to remove cyclohexane, 11 g (1 mmol) of the nonionic oligomer a31 was added, and the resulting mixture was allowed to react at 105°C for 24 hours. The resulting product was purified by reprecipitation in a large amount of isopropyl alcohol to obtain a block copolymer b31. This block copolymer b31 had a number-average molecular weight of 150,000 and a weight-average molecular weight of 340,000.

The IEC of the block copolymer b31 was 1.7 meq/g. In an electrolyte membrane produced using the block copolymer b31, a co-continuous phase-separation structure (in which each of the hydrophilic domain containing an ionic group and the hydrophobic domain containing no ionic group formed a continuous phase) was verified. In addition, a crystallization peak was exhibited in DSC, and the heat of crystallization was 22.5 J/g. Accordingly, the product of the IEC and the heat of crystallization was 38.3.

[Comparative Example 22]

<Synthesis of nonionic-group oligomer a33 represented by the following general formula (G13))

A nonionic oligomer a33 having a hydroxy end was synthesized by the same method as in Comparative Example 21 except that, in the synthesis of the nonionic oligomer 31 in Comparative Example 21, 18.62 g of 4,4'-biphenol (an Aldrich reagent, 100 mmol) was used in place of 25.8 g of K-DHBP (100 mmol), and that the amount of 4,4'-difluorobenzophenone fed was changed to 21.41 g. The number-average molecular weight was 22,000.

In addition, a nonionic oligomer a33 (having a fluoro end group) was synthesized by the same method as in Comparative Example 21 except that 50.0 g (2 mmol) of the nonionic oligomer a33 having a hydroxy end was fed in place of the nonionic oligomer a31 having a hydroxy end. The number-average molecular weight was 23,000. In this regard, m represents an integer of 1 or greater in the general formula (G13).

[Chem. 27]

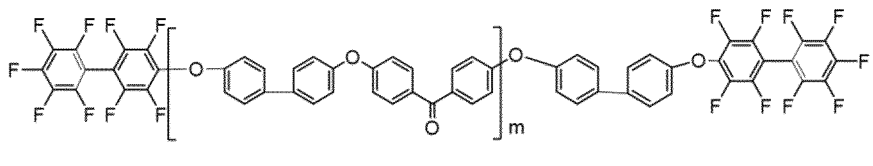

(G13)

<Synthesis of ionic-group oligomer a34 represented by the above-described general formula (G5)>

Into a 2,000 mL SUS polymerizer equipped with a stirrer, a nitrogen introduction tube, and a Dean-Stark trap, 27.6 g of potassium carbonate (an Aldrich reagent, 200 mmol), 25.8 g (100 mmol) of K-DHBP obtained in Synthesis Example 1, 41.4 g (98.1 mmol) of disodium-3,3'-disulfonate-4,4'-difluorobenzophenone obtained in Synthesis Example 2, and 17.9 g of 18-crown-6 ether (Wako Pure Chemical Industries, Ltd., 82 mmol) were introduced. After the device was purged with nitrogen, 300 mL of NMP and 100 mL of toluene were added, the resulting mixture was dehydrated at 170°C, the temperature was raised to remove toluene, and the mixture was polymerized at 180°C for 1 hour. The resulting product was purified by reprecipitation in a large amount of isopropyl alcohol to obtain an ionic oligomer a34 (having an OM end group) represented by the general formula (G5). The number-average molecular weight of this ionic oligomer a34 was 28,000.

<Synthesis of block copolymer b32>

The block copolymer b32 contains the oligomer a34 as the ionic segment and the oligomer a33 as the nonionic segment.

A block copolymer b32 was obtained by the same method as in Comparative Example 21 except that 26 g (1 mmol) of the ionic oligomer a34 was introduced in place of the ionic oligomer a32, and that 21 g (1 mmol) of the nonionic oligomer a33 was introduced in place of the nonionic oligomer a31. This block copolymer b32 had a number-average molecular weight of 110,000 and a weight-average molecular weight of 380,000.

The IEC of the block copolymer b32 was 1.9 meq/g. In an electrolyte membrane produced using the block copolymer b32, a co-continuous phase-separation structure (in which each of the hydrophilic domain containing an ionic group and the hydrophobic domain containing no ionic group formed a continuous phase) was verified. In addition, a crystallization peak was exhibited in DSC, and the heat of crystallization was 25.3 J/g. Accordingly, the product of the IEC and the heat of crystallization was 48.1.

[Comparative Example 23]

<Synthesis of ionic-group oligomer a36 represented by the above-described general formula (G5)

An ionic oligomer a36 (having an OM end group) was obtained by the same method as in Comparative Example 21 except that the amount of disodium-3,3'-disulfonate-4,4'-difluorobenzophenone fed was changed to 40.1 g (95 mmol). The number-average molecular weight of this ionic oligomer a36 was 21,000.

<Synthesis of block copolymer b33>

The block copolymer b33 contains the oligomer a36 as the ionic segment and the oligomer a31 as the nonionic segment.

A block copolymer b33 was obtained by the same method as in Comparative Example 21 except that 21 g (1 mmol) of the ionic oligomer a36 was introduced in place of the ionic oligomer a32. This block copolymer b33 had a number-average molecular weight of 140,000 and a weight-average molecular weight of 350,000.

The IEC of the block copolymer b33 was 2.1 meq/g. In an electrolyte membrane produced using the block copolymer b33, a co-continuous phase-separation structure (in which each of the hydrophilic domain containing an ionic group and the hydrophobic domain containing no ionic group formed a continuous phase) was verified. In addition, a crystallization peak was exhibited in DSC, and the heat of crystallization was 16.0 J/g. Accordingly, the product of the IEC and the heat of crystallization was 33.6.

[Comparative Example 24]

<Synthesis of nonionic oligomer a35 represented by the following general formula (G14)>

Into a 2,000 mL SUS polymerizer equipped with a stirrer, a nitrogen introduction tube, and a Dean-Stark trap, 16.59 g of potassium carbonate (an Aldrich reagent, 120 mmol), 25.8 g (100 mmol) of K-DHBP obtained in Synthesis Example 1, and 20.3 g of 4,4'-difluorobenzophenone (an Aldrich reagent, 93 mmol) were introduced. After the device was purged with nitrogen, 300 mL of NMP and 100 mL of toluene were added, the resulting mixture was dehydrated at 160°C, the temperature was raised to remove toluene, and the mixture was polymerized at 180°C for 1 hour. The resulting product was purified by reprecipitation in a large amount of methanol to obtain a nonionic oligomer a35 having a hydroxy end. The number-average molecular weight of this nonionic oligomer a35 having a hydroxy end group was 10,000.

Into a 500 mL three-necked flask equipped with a stirrer, a nitrogen introduction tube, and a Dean-Stark trap, 1.1 g of potassium carbonate (an Aldrich reagent, 8 mmol) and 20.0 g (2 mmol) of the nonionic-group oligomer a35 having a hydroxy end were introduced. After the device was purged with nitrogen, 100 mL of NMP and 30 mL of cyclohexane were introduced, the resulting mixture was dehydrated at 100°C, the temperature was raised to remove cyclohexane, 3.0 g of bis(4-fluorophenyl sulfone) (an Aldrich reagent, 12 mmol) was added, and the resulting mixture was allowed to react at 105°C for 1 hour. The resulting product was purified by reprecipitation in a large amount of isopropyl alcohol to obtain a nonionic oligomer a35 (having a fluoro end group) represented by the following general formula (G14). The number-average molecular weight of this nonionic oligomer a35 was 11,000. In this regard, m represents an integer of 1 or greater in the general formula (G14).

[Chem. 28]

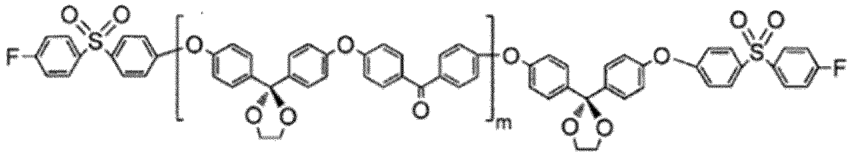

(G14)

<Synthesis of ionic-group oligomer a38 represented by the above-described general formula (G5)>

Into a 2,000 mL SUS polymerizer equipped with a stirrer, a nitrogen introduction tube, and a Dean-Stark trap, 27.6 g of potassium carbonate (an Aldrich reagent, 200 mmol), 12.9 g (50 mmol) of K-DHBP obtained in Synthesis Example 1, 9.3 g of 4,4'-biphenol (an Aldrich reagent, 50 mmol), 40.1 g (95 mmol) of disodium-3,3'-disulfonate-4,4'-difluorobenzophenone obtained in Synthesis Example 2, and 17.9 g of 18-crown-6 (Wako Pure Chemical Industries, Ltd., 82 mmol) were introduced. After the device was purged with nitrogen, 300 mL of NMP and 100 mL of toluene were added, the resulting mixture was dehydrated at 1170°C, the temperature was raised to remove toluene, and the mixture was polymerized at 180°C for 1 hour. The resulting product was purified by reprecipitation in a large amount of isopropyl alcohol to obtain an ionic oligomer a38 (having an OM end group) represented by the general formula (G5). The number-average molecular weight of this ionic oligomer a38 was 21,000.

<Synthesis of block copolymer b34>

The block copolymer b34 contains the oligomer a38 as the ionic segment and the oligomer a35 as the nonionic segment.

Into a 500 mL three-necked flask equipped with a stirrer, a nitrogen introduction tube, and a Dean-Stark trap, 0.56 g of potassium carbonate (an Aldrich reagent, 4 mmol) and 21 g (1 mmol) of the ionic oligomer a38 were introduced. After the device was purged with nitrogen, 100 mL of NMP and 30 mL of cyclohexane were introduced, the resulting mixture was dehydrated at 100°C, the temperature was raised to remove cyclohexane, 11 g (1 mmol) of the nonionic oligomer a35 was added, and the resulting mixture was allowed to react at 105°C for 24 hours. The resulting product was purified by reprecipitation in a large amount of isopropyl alcohol to obtain a block copolymer b34. This block copolymer b34 had a number-average molecular weight of 140,000 and a weight-average molecular weight of 320,000.

The IEC of the block copolymer b34 was 2.2 meq/g. In an electrolyte membrane produced using the block copolymer b34, a lamellar phase-separation structure was verified. In addition, a crystallization peak was exhibited in DSC, and the heat of crystallization was 12.5 J/g. Accordingly, the product of the IEC and the heat of crystallization was 27.5.

[Comparative Example 25]

<Synthesis of nonionic oligomer a37 represented by the following general formula (G15))

Into a 500 mL three-necked flask equipped with a stirrer, a nitrogen introduction tube, and a Dean-Stark trap, 13.82 g of potassium carbonate (an Aldrich reagent, 100 mmol), 20.66 g (80 mmol) of K-DHBP obtained in Synthesis Example 1, and 20.95 g of 4,4'-difluorobenzophenone (an Aldrich reagent, 96 mmol) were introduced. After the device was purged with nitrogen, 90 mL of NMP and 45 mL of toluene were added, the resulting mixture was dehydrated at 180°C, the temperature was raised to remove toluene, and the mixture was polymerized at 210°C for 1 hour. The resulting product was purified by reprecipitation in a large amount of water, and washed with hot methanol to obtain a nonionic oligomer a37 represented by the following general formula (G15). The number-average molecular weight of this nonionic oligomer a37 was 3,000. In this regard, $N_3$ represents an integer of 1 or greater in the general formula (G15).

[Chem. 29]

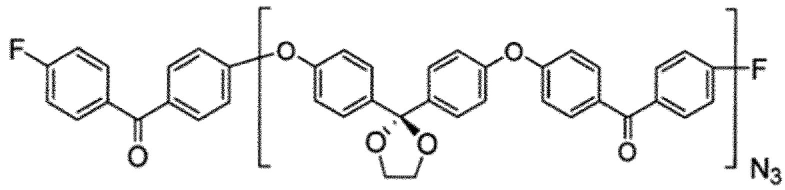

(G15)

<Synthesis of block copolymer b35)

Into a 500 mL three-necked flask equipped with a stirrer, a nitrogen introduction tube, and a Dean-Stark trap, 8.29 g of potassium carbonate (an Aldrich reagent, 60 mmol), 8.94 g of 4,4'-biphenol (an Aldrich reagent, 48 mmol), and 16.89 g (40 mmol) of disodium-3,3'-disulfonate-4,4'-difluorobenzophenone obtained in Synthesis Example 2 were introduced. After the device was purged with nitrogen, 90 mL of NMP and 45 mL of toluene were added, the resulting mixture was dehydrated at 180°C, the temperature was raised to remove toluene, and the mixture was polymerized at 210°C for 1 hour to obtain an ionic oligomer a40. The number-average molecular weight of this ionic oligomer a40 was 4,000.

Next, 17.46 g (40 mmol) of the nonionic oligomer a37 and 20 mL of toluene were added, the resulting mixture was dehydrated at 180°C again, the temperature was raised to remove toluene, and the mixture was polymerized at 230°C for 8 hours to obtain a block copolymer b35. This block copolymer b35 had a number-average molecular weight of 110,000 and a weight-average molecular weight of 271,000.

The IEC of the block copolymer b35 was 2.1 meq/g. In an electrolyte membrane produced using the block copolymer b35, a sea-island phase-separation structure was verified. In addition, a crystallization peak was exhibited in DSC, and the heat of crystallization was 11.1 J/g. Accordingly, the product of the IEC and the heat of crystallization was 23.3.

[Comparative Example 26]

<Block copolymer b36>

The above-described block copolymer b8 was used as the block copolymer b36. The block copolymer b36 exhibited no crystallization peak in DSC. Accordingly, the product of the IEC and the heat of crystallization was not calculable.

[Results of Measurement]

The results of measurement of the electrolyte material obtained in each of Examples 21 to 27 and Comparative Examples 21 to 26 are shown in Table 3.

[Table 3]

| | Type | Ionic Segment Mn1 | Nonionic Segment Mn2 | Block Copolymer Mn3 | Mn1/Mn2 | IEC (meq/g) | Heat of Crystallization (J/g) | Product of IEC and Heat of Crystallization | Phase-Separation Structure | Phase-Separation Priod Size (nm) | Rate of Dry-Wet Dimensional Change (%) | High-Humidity Proton Conductivity (mS/cm) | Low-Humidity Proton Conductivity (mS/cm) |
|---|---|---|---|---|---|---|---|---|---|---|---|---|---|
| | Electrolyte Material (II) | | | | | Physical Properties | | | | | | | |
| Example 21 | Block Copolymer b31 | 16,000 | 11,000 | 150,000 | 1.45 | 1.7 | 22.5 | 38.3 | Co-continuous | 18 | 3.3 | 2.05 | 0.13 |
| Example 22 | Block Copolymer b32 | 28,000 | 23,000 | 110,000 | 1.22 | 1.9 | 25.3 | 48.1 | Co-continuous | 37 | 3.4 | 2.91 | 0.16 |
| Example 23 | Block Copolymer b33 | 21,000 | 11,000 | 140,000 | 1.91 | 2.1 | 16.0 | 33.6 | Co-continuous | 30 | 5.5 | 3.21 | 0.21 |
| Example 24 | Block Copolymer b34 | 21,000 | 11,000 | 140,000 | 1.91 | 2.2 | 12.5 | 27.5 | Lamellar | 30 | 5.6 | 3.82 | 0.24 |
| Example 25 | Block Copolymer b35 | 4,000 | 8,000 | 110,000 | 1.33 | 2.1 | 11.1 | 23.3 | Sea-Island | 10 | 6.1 | 2.02 | 0.07 |
| Example 26 | Block Copolymer b36 | 41,000 | 11,000 | 120,000 | 3.73 | 2.4 | - | - | Co-continuous | 32 | 7.1 | 6.65 | 0.70 |

In Examples 21 to 27, the electrolyte material (II) the IEC of which was 1.8 meq/g or more and 3.0 meq/g or less and which gives 35.0 or more and 47.0 or less as the product of the IEC and heat of crystallization (J/g) was used, and accordingly, the rate of dry-wet dimensional change was small, and the proton conductivity at low humidity and high humidity was high. That is, both the mechanical durability and the proton conductivity were achieved at a comparatively high level.

On the other hand, in all of Comparative Examples 21 to 26, either the IEC or the product of the IEC and the heat of crystallization (J/g) was out of the above-described range, and the rate of dry-wet dimensional change or the proton conductivity was poor. That is, the mechanical durability and the proton conductivity were not achieved simultaneously.

In the present invention, from the viewpoint of achieving both mechanical durability and proton conductivity at a comparatively high level, it is preferable that the rate of dry-wet dimensional change is 7.0% or less, the low-humidity proton conductivity is 0.85 mS/cm or more, and the high-humidity proton conductivity is 9.00 mS/cm or more, it is more preferable that the rate of dry-wet dimensional change is 6.5% or less, the low-humidity proton conductivity is 0.90 mS/cm or more, and the high-humidity proton conductivity is 9.50 mS/cm or more, it is still more preferable that the rate of dry-wet dimensional change is 6.0% or less, the low-humidity proton conductivity is 1.00 mS/cm or more, and the high-humidity proton conductivity is 11.00 mS/cm or more, and it is particularly preferable that the rate of dry-wet dimensional change is 5.7% or less, the low-humidity proton conductivity is 1.10 mS/cm or more, and the high-humidity proton conductivity is 13.00 mS/cm or more.

Reference Signs List

1 Phase 1
2 Phase 2

## Claims

1. A polymer electrolyte material composed of a block copolymer containing a segment containing an ionic group (hereinafter referred to as an "ionic segment") and a segment containing no ionic group (hereinafter referred to as a "nonionic segment"), wherein said polymer electrolyte material has a phase-separation structure, and satisfies at least one of the following condition 1 or condition 2:

   <Condition 1> the saturated crystallinity of said polymer electrolyte material is 5% or more and 30% or less, as measured by wide-angle X-ray diffraction; and
   <Condition 2> the ion exchange capacity (IEC) of said polymer electrolyte material is 1.8 meq/g or more and 3.0 meq/g or less, and the product of the IEC (meq/g) of said polymer electrolyte material and the heat of crystallization (J/g) of said polymer electrolyte material, as measured by differential scanning calorimetry analysis, is 35.0 or more and 47.0 or less.

2. The polymer electrolyte material according to claim 1, wherein said polymer electrolyte material has a co-continuous or lamellar phase-separation structure.

3. The polymer electrolyte material according to claim 1 or 2, wherein said phase-separation structure has an average period size of 15 to 100 nm.

4. The polymer electrolyte material according to any one of claims 1 to 3, wherein said block copolymer is an aromatic polyether copolymer.

5. The polymer electrolyte material according to any one of claims 1 to 4, wherein said block copolymer is an aromatic polyether ketone copolymer.

6. The polymer electrolyte material according to any one of claims 1 to 5, wherein said block copolymer comprises a linker site that links the ionic segment with the nonionic segment.

7. The polymer electrolyte material according to any one of claims 1 to 6, wherein said nonionic segment comprises a structure represented by the following general formula (S3):

[Chem. 1]

$$* \text{-}Ar^5\text{-}Y^3\text{-}Ar^6\text{-}O\text{-}Ar^7\text{-}Y^4\text{-}Ar^8\text{-}O\text{-} * \qquad (S3)$$

(wherein, in the general formula (S3), $Ar^5$ to $Ar^8$ independently represent a substituted or unsubstituted arylene group with the proviso that none of $Ar^5$ to $Ar^8$ has an ionic group; $Y^3$ and $Y^4$ independently represent a ketone group or a protective group that may be induced to a ketone group; and the symbol * represents a bond with the general formula (S3) or with another constituent unit.)

**8.** The polymer electrolyte material according to claim 7, wherein said structure represented by the general formula (S3) is a structure represented by the following general formula (S4):

[Chem. 2]

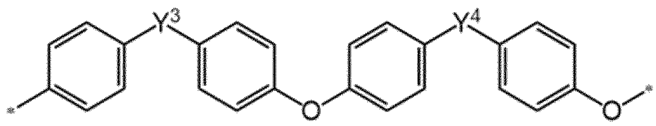

(S4)

(wherein, in the general formula (S4), $Y^3$ and $Y^4$ independently represent a ketone group or a protective group that may be induced to a ketone group; and the symbol * represents a bond with the general formula (S4) or with another constituent unit.

**9.** The polymer electrolyte material according to any one of claims 1 to 8, wherein the number-average molecular weight of said nonionic segment is 15,000 or more.

**10.** A molded polymer electrolyte product comprising said polymer electrolyte material according to any one of claims 1 to 9.

**11.** A catalyst coated membrane constituted using said molded polymer electrolyte product according to claim 10.

**12.** A membrane electrode assembly constituted using said molded polymer electrolyte product according to claim 10.

**13.** A polymer electrolyte fuel cell constituted using said molded polymer electrolyte product according to claim 10.

**14.** A water electrolysis hydrogen generator constituted using said molded polymer electrolyte product according to claim 10.

[FIG. 1]

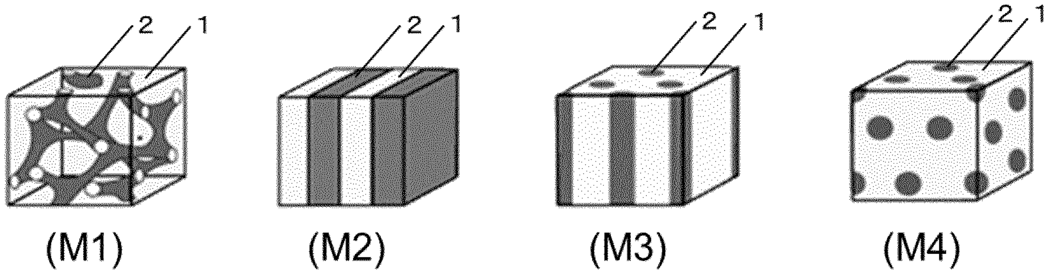

## INTERNATIONAL SEARCH REPORT

International application No. **PCT/JP2022/008257**

### A. CLASSIFICATION OF SUBJECT MATTER

***C08G 65/34***(2006.01)i; ***C08G 65/40***(2006.01)i; ***C08G 81/00***(2006.01)i; ***C08J 5/22***(2006.01)i; ***H01B 1/06***(2006.01)i; ***H01B 1/12***(2006.01)i; ***H01M 8/10***(2016.01)i; ***H01M 8/1018***(2016.01)i; ***H01M 8/1025***(2016.01)i; ***H01M 8/1067***(2016.01)i; ***C25B 13/04***(2021.01)i; ***C25B 13/08***(2006.01)i; ***C25B 1/04***(2021.01)i

FI: C08G81/00; H01M8/1018; C08J5/22 101; H01M8/10 101; H01B1/12 Z; H01B1/06 A; H01M8/1067; H01M8/1025; C25B1/04; C25B13/04 301; C25B13/08 301; C08G65/40; C08J5/22 CEZ; C08G65/34

According to International Patent Classification (IPC) or to both national classification and IPC

### B. FIELDS SEARCHED

Minimum documentation searched (classification system followed by classification symbols)

C08G65/34; C08G65/40; C08G81/00; C08J5/22; H01B1/06; H01B1/12; H01M8/10; H01M8/1018; H01M8/1025; H01M8/1067; C25B13/04; C25B13/08; C25B1/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2013/002274 A1 (TORAY INDUSTRIES, INC) 03 January 2013 (2013-01-03) claims, paragraphs [0052], [0093]-[0096], [0144]-[0146], examples 15-20, comparative examples 1-6 | 1-14 |
| X | WO 2013/027724 A1 (TORAY INDUSTRIES, INC) 28 February 2013 (2013-02-28) claims, paragraphs [0024], [0029], [0112], examples, comparative examples | 1-14 |
| A | WO 2013/031675 A1 (TORAY INDUSTRIES, INC) 07 March 2013 (2013-03-07) | 1-14 |
| A | WO 2008/018487 A1 (TORAY INDUSTRIES, INC) 14 February 2008 (2008-02-14) | 1-14 |
| A | JP 2015-95399 A (KANEKA CORP) 18 May 2015 (2015-05-18) | 1-14 |
| A | JP 2014-71971 A (HITACHI, LTD) 21 April 2014 (2014-04-21) | 1-14 |
| A | JP 2018-110108 A (TORAY INDUSTRIES, INC) 12 July 2018 (2018-07-12) | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/008257**

| Patent document cited in search report | Publication date (day/month/year) | Patent family member(s) | Publication date (day/month/year) |
|---|---|---|---|
| WO 2013/002274 A1 | 03 January 2013 | US 2014/0213671 A1<br>claims, examples, paragraphs [0052], [0093]-[0096], [0145]-[0147], examples 15-20, comparative examples 1-6<br>EP 2690122 A1<br>CA 2833684 A1<br>KR 10-2014-0007982 A<br>CN 103635507 A | |
| WO 2013/027724 A1 | 28 February 2013 | US 2014/0193742 A1<br>claims, paragraphs [0025], [0031], [0114], examples, comparative examples<br>EP 2749585 A1<br>CA 2844911 A1<br>CN 103748137 A<br>KR 10-2014-0051939 A | |
| WO 2013/031675 A1 | 07 March 2013 | US 2014/0322628 A1<br>EP 2752928 A1<br>CA 2847107 A1<br>CN 103782434 A<br>KR 10-2014-0041924 A | |
| WO 2008/018487 A1 | 14 February 2008 | US 2010/0196782 A1<br>EP 2051321 A1<br>EP 2568521 A2<br>CA 2657462 A1<br>KR 10-2009-0040431 A<br>CN 101485022 A | |
| JP 2015-95399 A | 18 May 2015 | (Family: none) | |
| JP 2014-71971 A | 21 April 2014 | US 2014/0093792 A1 | |
| JP 2018-110108 A | 12 July 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008018487 A
- WO 2013031675 A


### Non-patent literature cited in the description


- *Annual Review of Physical Chemistry,* 1990, vol. 41, 525